(19) Europäisches Patentamt
European Patent Office
Office européen des brevets

(11) EP 0 424 139 B1

(12) **EUROPEAN PATENT SPECIFICATION**

(45) Date of publication and mention
of the grant of the patent:
**16.04.1997 Bulletin 1997/16**

(51) Int Cl.⁶: **H01L 41/09**

(21) Application number: **90311426.2**

(22) Date of filing: **18.10.1990**

(54) **Ultrasonic motor**

Ultraschallmotor

Moteur à ultrasons

(84) Designated Contracting States:
**CH DE GB LI**

(30) Priority: 20.10.1989 JP 273082/89
16.01.1990 JP 2503/90 U
16.01.1990 JP 2504/90 U
15.02.1990 JP 14036/90 U
19.02.1990 JP 15314/90 U
06.03.1990 JP 54031/90
08.06.1990 JP 150165/90
22.06.1990 JP 66299/90 U
06.07.1990 JP 178714/90

(43) Date of publication of application:
**24.04.1991 Bulletin 1991/17**

(73) Proprietor: **SEIKO EPSON CORPORATION**
**Shinjuku-ku Tokyo (JP)**

(72) Inventors:
• **Miyazawa, Osamu, c/o Seiko Epson Corporation**
**Suwa-shi, Nagano-ken (JP)**

• **Takeda, Kiyoto, c/o Seiko Epson Corporation**
**Suwa-shi, Nagano-ken (JP)**

(74) Representative: **Miller, Joseph et al**
**J. MILLER & CO.**
**34 Bedford Row,**
**Holborn**
**London WC1R 4JH (GB)**

(56) References cited:
**EP-A- 0 325 062       EP-A- 0 365 231**
**EP-A- 0 395 298**

• **JAPANESE JOURNAL OF APPLIED PHYSICS/ SUPPLEMENTS, vol. 26, no. 26-1, 1987, Tokyo, JP, pp. 191-193; T. IIJIMA et al.: 'Ultrasonic motor using flexural standing wave'**
• **PATENT ABSTRACTS OF JAPAN, vol. 13, no. 348 (E-799) 4 August 1989 ; & JP-A-1 107 678**

## Description

The present invention relates to an ultrasonic motor.

Various types of ultrasonic motors using ultrasonic vibration have been proposed as described in, for example JP-A-58-93477, JP-B-59-37673, JP-A-59-122385 and JP-A-60-51478. These known ultrasonic motors rotate continuously or move only when they are subjected to wave forms of special shape.

Consequently, it is necessary to use a feedback control system in the known ultrasonic motors to control their RPM, stop positions, and rotation speed, and it is also necessary to use a control circuit for the system, resulting in complication of the whole control system.

Consequently, it is the purpose of the present invention to provide an ultrasonic motor in which these shortcomings of the known ultrasonic motors are overcome and in which the motor can be driven stepwise since a stepwise driving system can be easily controlled.

According to the present invention, there is provided an ultrasonic motor comprising a stator; a vibrator formed on said stator for oscillating said stator; a rotor adapted to come into contact with said stator and driven by frictional force; a plurality of spaced apart projections formed on one of said rotor and said stator and in operation engaging with the other of said rotor and said stator, said projections being positioned opposite said vibrator with respect to said stator; and at least one drive control apparatus for impressing standing waves of a wavelength λ on a plurality of vibrating devices which form the said vibrator, characterised in that the drive control apparatus comprises means for changing the phases of the waves supplied to the individual vibrating devices or for effecting ON-OFF operation thereof, so as to shift the nodes of the standing waves stepwise by a given distance at a time.

The present invention enables the ultrasonic motor to be driven at will either by a continuous drive on advancing waves or by a stepwise drive on standing waves.

In its preferred form, the motor friction force between the stator and the rotor is stabilized so that functions such as the stability of the rotational speed, torque, efficiency, etc. are improved.

In a preferred form of the invention, the drive of the motor is made stable by forming relieved portions or dents on the stator or the rotor.

In one form of the invention, the ultrasonic motor has its machining cost decreased and its oscillation displacement enlarged by forming projections on diametrically extending portions thereof.

In one form of the present invention, the ultrasonic motor has a plurality of electrode patterns in which wirings are formed without difficulty.

The ultrasonic motor is preferably easy to manufacture, has oscillator properties which do not deteriorate, and has a conductive structure which does not affect the oscillation mode.

The ultrasonic motor may have a relieved portion corresponding to a slit, which portion may be formed by an etching process without difficulty.

The stator may be directly formed by piezo-electric material without the disadvantage of having to effect bonding.

The rotor of the ultrasonic motor may have a plurality of projections formed thereon at regular intervals so as to come into contact with the stator and to be stepwise driven.

The ultrasonic motor may have a drive control apparatus for impressing standing waves on a plurality of vibrating devices constituting the vibrator. The apparatus may change-over individually the phases, or may effect an ON-OFF operation. Changing over the phases enables stepwise driving of the motor. Thus, the ultrasonic motor can determine positions by sequential control means without feedback control, resulting in a number of circuits and parts and the like normally necessary in a control mechanism being omitted.

According to one embodiment of the invention, the ultrasonic motor has n(number) node diameters, and the positions of the nodes of a disc-like or ring-shaped stator, oscillate in a vibration mode of standing waves. The nodes shift by $\theta°$ degrees at a time, and accordingly the rotor rotates by $\theta°$ degrees at a time. $\theta$ is preferably such that $\theta°<90°/n$ in the direction of movement of the rotor.

By setting the amount of shift L of the positions of the nodes of the vibration mode at $L<\lambda/4$ or $\theta°<90°/n$ as described above, an ultrasonic step motor can be obtained which can be driven stepwise by a desired amount and in a desired direction in a stable condition.

In the preferred form of the present invention, it is possible to select at will either a stepwise drive by standing waves or a continuous drive by advancing waves. When the advancing wave drive is selected, it is possible to obtain a smooth rotation and a high speed feed of the motor.

The rotor may be constructed of flexible material. Consequently, stable contact may be obtained without any projections of the stator having heights which need to be precisely machined, so that an ultrasonic motor of high efficiency and low cost can be provided.

Slanted or curved relieved portions may be formed on sliding portions of the projections of the rotor. As a result, even though the construction is simple and of low cost, it is possible to prevent any interference between the projections of the rotor and the stator and to obtain a stable drive.

The stator of the ultrasonic motor may have projections and these projections may be formed on diametrical projections formed at the circumference of the stator. As a result, these projections of the stator can be manufactured in stages and at times corresponding merely to those produced in a tooth cutting method, resulting in considerable cost savings. The or each contact point between the stator and the rotor may be placed outside of the piezo-electric element. However, it is possible to increase the bending oscillation displacement because the rigidity does not change substantially relative to the deflection deformation.

Projections of the stator may be placed at positions spaced from those which may become vibration nodes and opposite to the vibration nodes. Because of projections at such positions, it is possible to attain an ultrasonic step motor having a precise stepping angle.

The ultrasonic motor may have a plurality of electrode patterns provided on a piezo-electric element and there may be wiring patterns corresponding to the plurality of electrode patterns.

The plurality of electrode patterns and wiring patterns may extend through an anisotropy conductor, so that these patterns are removable and easily conductable. Because an integral anisotropy conductor, not leads, is used in this case, a fixed contact conduction with the stator is maintained without any disadvantageous effect on the vibration mode.

A relieved portion of the stator or the rotor may be formed by etching so that it is easy to form it in any shape. Further, the piezo-electric material may be directly formed on the stator so that the undesirable effects on the vibration characteristics due to bonding can be avoided. Etching and direct-forming enable ultrasonic motors of miniature size to be obtained.

The invention is illustrated, merely by way of example, in the accompanying drawings, in which:-

Figure 1 is a block diagram showing in outline, an ultrasonic step motor according to the present invention, and a driving system therefor;

Figures 2a - 2e, respectively illustrate the principles of operation of the step motor;

Figure 3a illustrates the case in which there is a shift in the positions of the nodes of the stator of the step motor;

Figure 3b illustrates the condition in which the stator is moved from the Figure 3a position;

Figure 4 illustrates the case in which the positions of the nodes are shifted by $\lambda/4$;

Figure 5 illustrates the case in which the positions of the nodes are shifted by more than $\lambda/4$;

Figures 6a - 6d illustrate in detail a method of shifting the nodes;

Figure 7 is a section showing a first embodiment of an ultrasonic wave motion step motor according to the present invention;

Figure 8 is a plan view of the stator and the rotor of Figure 7;

Figure 9 is a plan view showing a second embodiment of a wave motion step motor according to the present invention;

Figure 10 illustrates vibration mode stepwise driving of the step motor of Figure 9;

Figure 11 is a timing chart of the phase of a driving voltage for the modes shown in Figure 10;

Figure 12 is a timing chart of the driving voltage for the step motor of Figure 9;

Figure 13 is a plan view showing a third embodiment of a wave motion step motor according to the present invention;

Figure 14 illustrates the positional relationship between a vibration mode and the contacting portions of the rotor of Figure 13;

Figure 15 is a timing chart of the phase of the driving voltage employed in the Figure 13 construction;

Figure 16 is another timing chart of the driving voltage employed in the Figure 13 construction;

Figure 17 illustrates another embodiment of a stator which may be employed in an ultrasonic motor according to the present invention;

Figures 18a - 18d respectively illustrate the relationship between the vibration mode of the stator and the rotor of a motor using the stator of Figure 17;

Figures 19a - 19c and 20a - 20c illustrate ways of producing other stepping angles;

Figure 21 is a circuit diagram of a drive control apparatus of a motor according to the present invention;

Figure 22 is a timing chart showing the operation of the circuit of Figure 21;

Figure 23 is a block diagram showing the construction of a drive control apparatus of another embodiment of a motor according to the present invention;

Figure 24A is an explanation view depicting an excitation method for a $2\lambda$ vibration mode;

Figure 24B is a view illustrating the excitation of a $3\lambda$ vibration mode;

Figure 25 is a view illustrating the excitation of a vibration mode of $3\lambda$ advancing waves;

Figures 26A and 26B are circuits which may be used in the drive control apparatus shown in Figure 23;

Figures 27A and 27B are a sectional view and a plan view respectively, showing a fourth embodiment of an ultrasonic motor according to the present invention;

Figure 28 is a sectional view showing a fifth embodiment of an ultrasonic motor according to the present invention;

Figure 29 is a section showing a sixth embodiment of an ultrasonic motor according to the present invention;

Figure 30 is a plan view of the rotor of the ultrasonic motor shown in Figure 29;

Figure 31 is a plan view showing another rotor which may be used in an ultrasonic motor according to the present invention;

Figure 32 illustrates the construction of a projection of the rotor;

Figures 33 and 34 respectively are views illustrating a contact condition between the rotor and the stator;

Figure 35 is a diagrammatic view of another construction of a projection of the rotor;

Figures 36 and 37 are diagrammatic views of projections of the stator;

Figure 38 is a sectional view of a seventh embodiment of an ultrasonic motor according to the present invention;

Figure 39 is a plan view of the stator shown in Figure 38;

Figure 40 is a sectional view of an eighth embodiment of an ultrasonic motor according to the present invention;

Figure 41 is a plan view of the stator shown in Figure 40;

Figure 42 is a top view of the stator of a wave motion step motor according to still another embodiment of the present invention;

Figure 43 is a view illustrating the principle of operation of the wave motion step motor of Figure 42;

Figure 44 is a sectional view of a ninth embodiment of a wave motion step motor according to the present invention;

Figure 45 is a plan view showing one embodiment of the stator shown in Figure 44;

Figure 46 is a plan view of one embodiment of a piezo-electric element shown in Figure 44;

Figure 47 is a plan view showing one embodiment of wiring patterns shown in Figure 44;

Figure 48 is a plan view showing one embodiment of an anisotropy conductor shown in Figure 44;

Figure 49 is a plan view showing an embodiment in which a stator, piezo-electric element, electrode pattern, and wiring pattern are assembled one on top of the other;

Figure 50 is a sectional view of a tenth embodiment of an ultrasonic motor according to the present invention;

Figure 51 is a bottom view of the rotor shown in Figure 50;

Figure 52 is a sectional view of an eleventh embodiment of an ultrasonic motor according to the present invention;

Figure 53 is a plan view of the stator shown in Figure 52;

Figures 54 and 55 respectively, are plan views showing still further embodiments of the stator, and

Figure 56 is a bottom view showing yet another embodiment of a rotor which may be used in a motor according to the present invention;

Figure 57 is a sectional view showing a timepiece employing an ultrasonic step motor according to the present invention;

Figure 58 is a plan view showing the relationship between the circuit patterns, the overhang portions and the vibrators of Figure 57;

Figures 59 to 62 and 64 are sectional views showing other embodiments of ultrasonic step motors according to the present invention; and

Figure 63 is a plan view showing the relationship between the circuit patterns, the overhang portions and the vibrators of Figure 62.

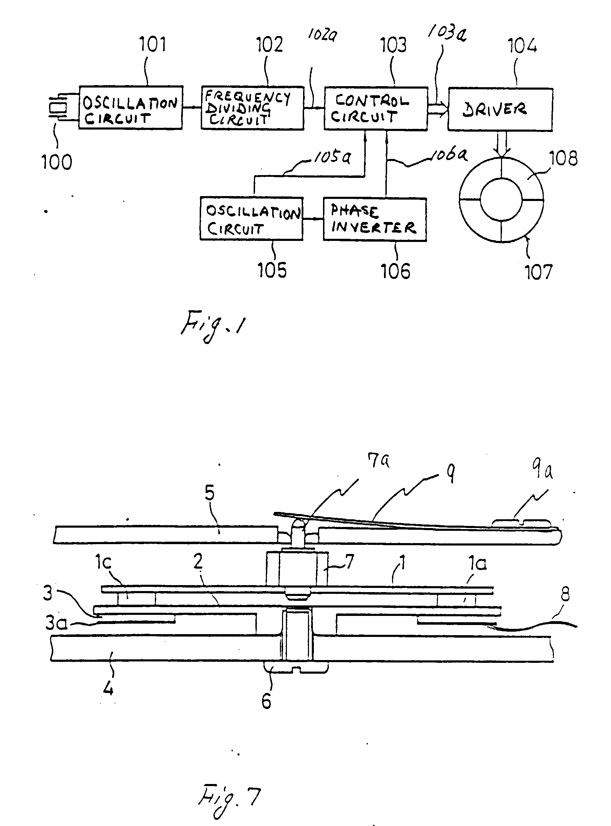

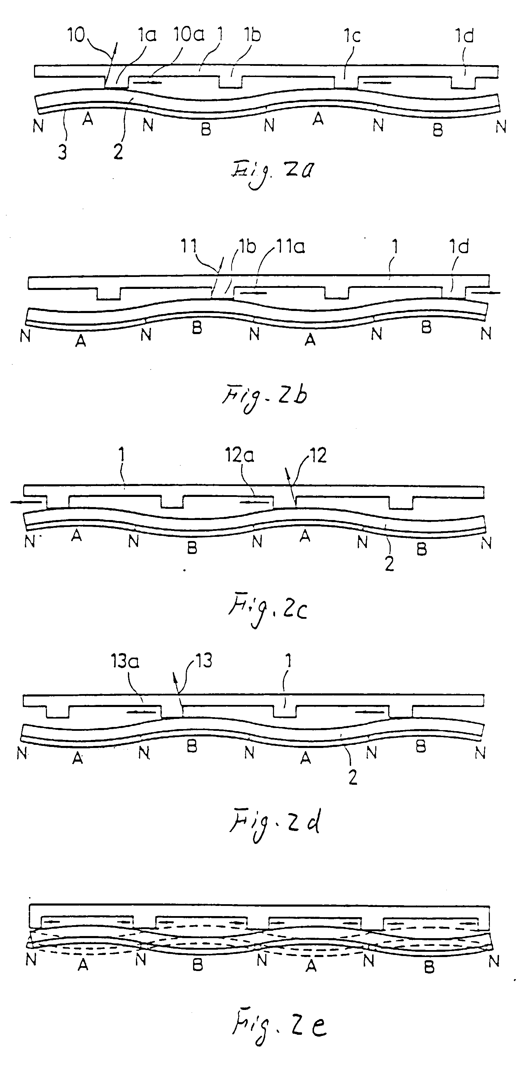

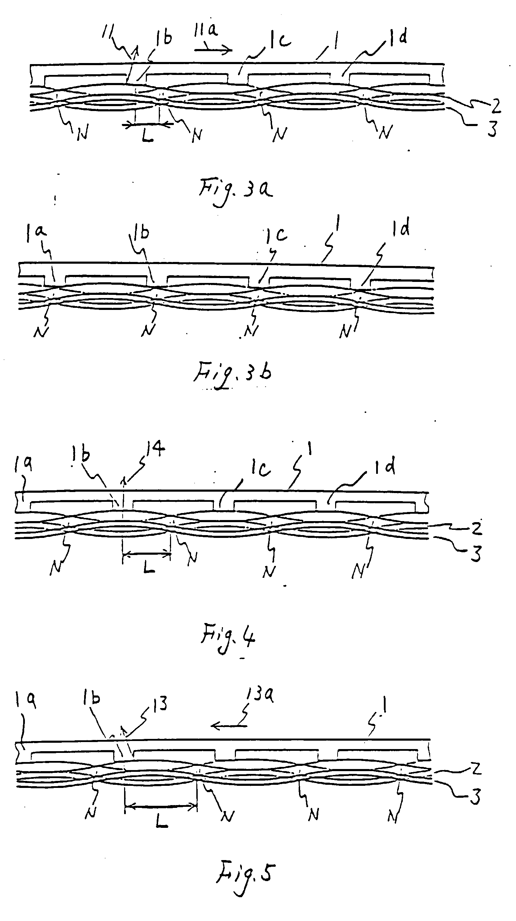

In Figure 1 there is shown a block diagram of an ultrasonic step motor according to the present invention and a driving system therefor. The motor and system have a crystal oscillation circuit 101, a crystal oscillator 100, and a frequency dividing circuit 102 which divides the frequency of output signals from the crystal oscillation circuit 101. Further, it includes a control circuit 103 which receives signals 102a from the frequency dividing circuit 102, there being inputted to the control circuit 103 both oscillation signals of an oscillation circuit 105, which oscillates at the same frequency as that of resonating vibrators 107, and signals of a phase inverter 106 for inverting the phase of the oscillation signals of the oscillation circuit 105. The intputted signals 102a which have been processed in the control circuit 103 are outputted therefrom as drive control signals 103a. A driver 104 amplifies the drive control signals 103a from the control circuit 103 so as to impress a driving voltage on the vibrators 107. There may for example, be four vibrators 107 as shown which form a vibrating device 108 in which each vibrator 107 can vibrate individually.

In Figure 1, reference numeral 105a indicates an output signal from the oscillator 105, and 106a indicates an output signal from the phase inverter 106, the phase of the signal 106a being opposite to that of the signal 105a. The output signal 102a from the frequency dividing circuit 102 controls the output signal 105a, and the output signal 106a from the phase invertor 106 is opposite in phase to that of the output signal 105a. The output signal 103a from the control circuit 103 controls and drives the vibrators 107.

Figures 2a - 2e, respectively illustrate the principles of operation of the ultrasonic step motor, and the latter will be described on the basis of an embodiment in which piezo-electric elements are used as vibrators.

Figure 2a shows a rotor 1 and a stator 2 in a vibration mode of a predetermined phase. The rotor 1 has projections 1a, 1b, 1c, and 1d, and the stator 2 has a piezo-electric element 3 mounted on its side opposite to the rotor 1. It should be noted that some of the said projections (i.e. the projections 1a, 1c) come partly into contact with the stator 2.

The piezo-electric element 3 consists of four vibrators of two different kinds, A and B. The A and B kinds are in reverse phase relationship. N indicates the nodes of the vibration mode of the stator 2.

Figure 2b shows the state of a vibration mode of reverse phase to that shown in Figure 2a. As shown in Figure 2b, the projections 1b and 1d come partly into contact with the stator 2.

In Figures 2a and 2b, forces 10 and 11 acting in the direction of the arrows shown are applied to the projections 1a and 1b of the rotor 1. These projections which come into contact with the stator 2 are separated by a distance equivalent to that between adjacent nodes N of the stator 2 or to another distance which is a number of times that of the former distance. These forces 10 and 11 have components of force 10a, 11a which act in the directions from the respective projections and towards the respective nodes N. In other words, the stator 2 is subjected to force or moves in the direction of the components of force 10a and 11a or in the direction toward the nodes N adjacent to the stator 2.

Figures 2c and 2d respectively show another example of the stator 2 and the rotor 1, positions of which are different from those shown in Figures 2a and 2b. In this case, the rotor 1 receives components 12a and 13a of the forces 12 and 13 (opposite to the components of force 10a and 11a shown in Figures 2a and 2b). The components of force 12a and 13a act toward the nearest nodes N.

Figure 2e shows a composite view of all the Figures 2a - 2d.

It will be appreciated that, in all the above cases, the projections 1a - 1d of the rotor 1 move toward a node N of the stator 2, so that it may be said that the position of the rotor 1 is determined by the position of the nodes N. Consequently, when the positions of the nodes N move stepwise, the rotor 1 also moves stepwise so as to function as a step motor. The nature of the stepwise motion will now be explained in detail.

Figure 3a shows the case in which the positions of the nodes N of the stator 2 shown in Figure 2e are shifted by a shifting distance L which is $\lambda/4$ or less. ($\lambda$ stands for the length of one wavelength in the vibration. The combined length of successive A and B components in Figure 2e forms one $\lambda$ ).

Figure 3b shows another case in which the rotor 1 is shifted from the position shown in Figure 3a. When the rotor 1 is placed in the position shown in Figure 3a, the forces 11 which are applied to the rotor 1 move the latter in the direction 11a shown. Consequently, as shown in Figure 3b, the projections 1a - 1d move to the positions of the nodes N, and the rotor 1 stops there.

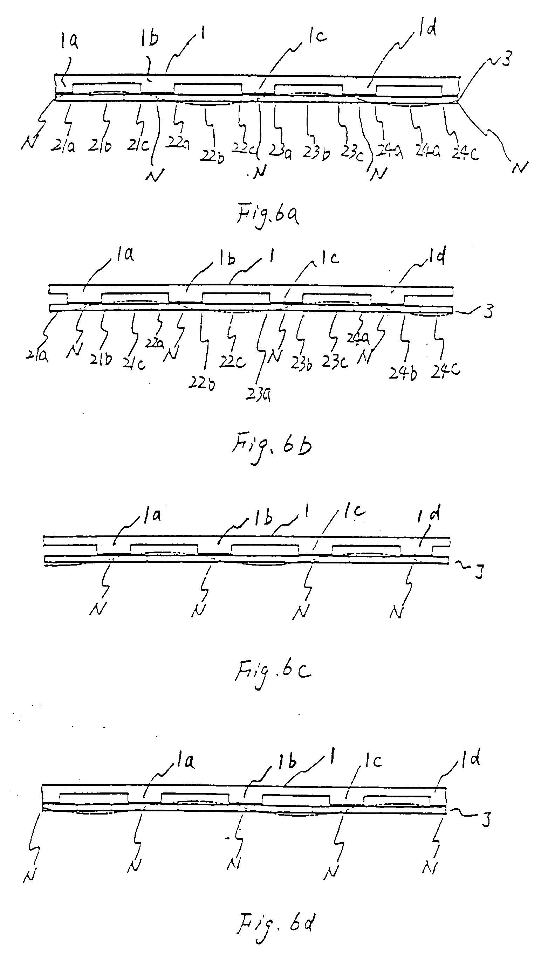

Figure 4 illustrates a case in which the positions of the nodes N shown in Figure 2e are shifted by $L = \lambda/4$. In this case, forces 14 in a vertical direction act on the projections 1a and 1c, or 1b and 1d, of the rotor 1, so that the rotor 1 does not rotate, and it oscillates vertically in unstable condition.

Figure 5 illustrates a case in which the positions of the nodes N shown in Figure 2e are shifted by $L > \lambda/4$. Forces 13 acting on the rotor 1 are disadvantageously applied in the direction shown and the rotor 1 moves in the opposite direction 13a.

As described above, by setting the amount of shift or distance L of the nodes to $L < \lambda/4$, it is possible to move the rotor stably to suitable or desired positions.

It is also possible to determine the apparent amount of shift of the node to, for example $\lambda/2 < L < 3\lambda/4$. Because another node exists at the position of $\lambda/2$, the above expression substantially equals $0 < L < \lambda/4$.

Figures 6a - 6d each illustrate in detail a method of shifting the nodes of the stator 2 and also in part illustrate the case in which the vibrating devices of Figure 2 are divided in threes. The piezo-electric element 3 in this case consists of vibrating devices 21a, 21b, 21c; 22a, 22b, 22c; 23a, 23b, 23c; 24a, 24b and 24c. In practice, the piezo-electric element 3 is applied to the stator 2 as shown in Figure 2. However, the stator 2 is not shown in Figures 6a - 6d. When it has vibrating devices which can be shifted and oscillate individually, the stator 2 need not be provided with piezo-electric elements. Thus, for example, super magnetic strain elements and electric strain elements may be used.

It is to be understood that, as shown in Figure 6a, the vibrating devices 21a, 21b, 21c, 23a, 23b, and 23c are grouped and called Group 1, and that the other vibrating devices 22a, 22b, 22c, 24a, 24b and 24c are called Group 2. Each of the Groups 1 and 2 is driven so that they are deformed in opposite directions. As a result, during the condition of vibration, the nodes N are formed between the vibrating devices 21c and 22a, 22c and 23a, 23c and 24a, and at both ends of the stator. Consequently, the projections 1a - 1d of the rotor 1 are stable at their positions corresponding to the nodes N. The broken lines shown show the shape of the vibration mode at a certain instant.

Next, in the case or embodiment shown in Figure 6a, the vibrating devices 21b, 21c, 22a, 23b, 23c, and 24a are grouped together, and the other devices 22b, 22c, 23a, 24b, 24c, and 24a, are grouped together. When the respective groups are driven so as to be deformed in the opposite directions, the nodes N are formed between the vibrating devices 21a and 21b, 22a and 22b, 23a and 23b and 24a and 24b. The positions of the nodes N shown in Figure 6b are shifted to the right from that of the nodes N in Figure 6a, so that the positions on the rotor 1 at which the projections 1a - 1d make contact with the stator change stepwise. By changing the vibration mode sequentially as shown in Figures 6a and 6d, it is possible to move the rotor 1 stepwise.

Figure 7 is a section showing a first embodiment in which an ultrasonic wave motion step motor according to the present invention is applied to a rotary-type motor and Figure 8 is a plan view of the rotor and the stator shown in Figure 7. As shown, the construction consists of a base plate 4 for securing the stator 2 in position by means of a screw 6; a wheel-train support 5 in which the rotor 1 is rotatably mounted, the rotor 1 having a pinion 7 for transmitting the rotation force of the rotor 1; and a lead wire 8 for impressing a voltage on an electrode pattern 3a of the piezo-electric element 3 secured to the stator 2. In the construction of Figures 7 and 8, the projections 1a - 1d are provided at several positions so as to protrude in the thickness direction of the rotor 1. A pivot 7a of the pinion 7 is rotatably mounted in the wheel-train support 5 and is urged towards the stator 2 by a pressure spring 9 held to the support 5 by a securing screw 9a. Friction force is thus imparted between the projections 1a - 1d of the rotor 1 and the stator 2.

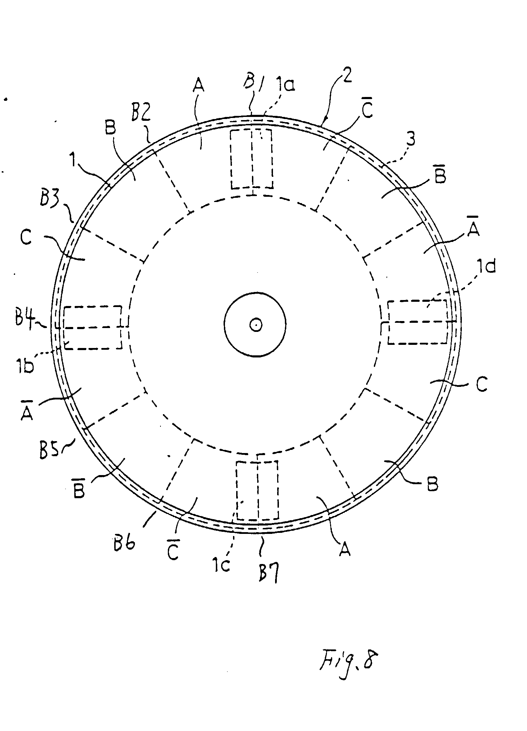

A second embodiment of an ultrasonic motor according to the present invention in which the wave motion step motor is applied to a rotary-type motor is shown in Figure 9. According to this embodiment, a projection 2a is provided on the stator 2 so as to extend along the whole circumference of the stator 2, and projections 1a - 1d extend in diametric directions from the rotor 1. The rotor 1 in the respective embodiments shown in Figures 7, 8 and 9 has four projections at which the rotor 1 and the stator 2 come in contact. The vibrator consisting of the piezo-electric element 3 consists of twelve (12) vibrating devices shown with broken lines. These vibrating devices are shown as A, B, C, $\overline{A}$, $\overline{B}$, $\overline{C}$ and on those devices having the same symbol, an identical drive voltage is impressed. The symbols B1 - B7 are applied in sequence to the positions of the nodes of the vibration mode. It is to be understood that in this embodiment four nodes N are formed, and number of the positions around the whole circumference of the stator 2 at which a node can be formed is twelve.

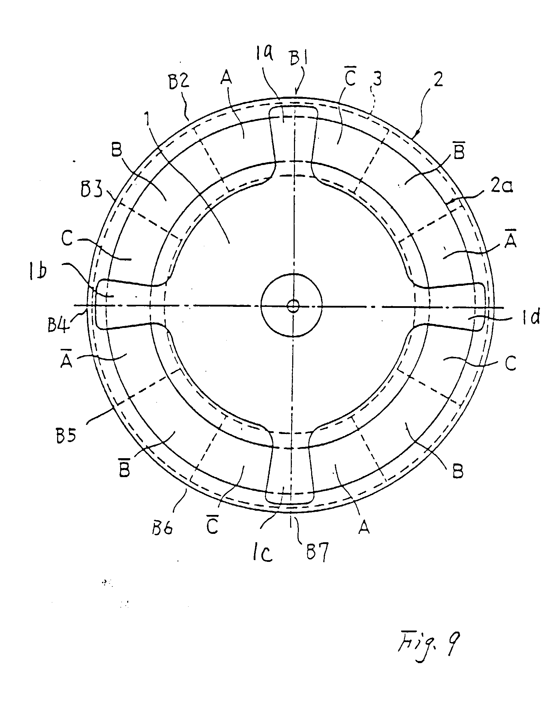

Figure 10 illustrates the ultrasonic step motor of Figure 9 being driven stepwise. The various symbols shown in Figure 10 correspond to those in Figure 9. The diagrams of Figure 10, for convenience of explanation, are linearly developed. The broken lines show the shape of the vibration mode, and the phase of the voltage being applied to each vibration device at the moment are conveniently shown by "+" and "-".

When the vibration mode is as shown at B1, two groups comprising A, B, C and $\overline{A}$, $\overline{B}$, $\overline{C}$ are respectively formed and these groups vibrate with phases which are 180 degrees apart, so that the projections 1a, 1b, 1c and 1d of the rotor 1 are moved to the positions shown.

In the vibration mode B2, groups B, C, $\overline{A}$, and $\overline{B}$, $\overline{C}$, A, respectively are formed. In the vibration mode B3, groups C, $\overline{A}$, $\overline{B}$, and $\overline{C}$, A, B, respectively are formed. After that, various vibration modes B3 - B6 are sequentially repeated and as a result the rotor 1 moves stepwise. In the case of the rotary-type motor shown in Figure 9, one revolution consists of twelve (12) steps.

When a step is effected in the reverse direction with respect to the vibration modes B1 - B6 shown, and for example, it is changed to obtain the vibration mode B2 after the vibration mode B3, the rotor 1 moves in the direction opposite to that of the cases above.

As is apparent from the explanation of Figure 10, it is easy to use the ultrasonic step motor as a linear motor.

Figure 11 shows a phase timing chart of the vibration modes shown in Figure 10. In order to create, for example, the vibration mode B1, a drive voltage having a positive (+) phase is impressed on A, B, C and that of a negative (-) phase is impressed on $\overline{A}$, $\overline{B}$, $\overline{C}$. Control of the voltage impressions mentioned above is carried out by the control circuit 103 (Figure 1). In detail, assuming that the output signal 105a from the oscillation circuit 105 is of a positive (+) phase the output signal 106a, which is of the reverse phase to that of the output signal 105a from the oscillation circuit 105, is given a negative (-) phase and it is changed-over at the timing of the control signal 102a of the frequency division circuit 102. Six kinds A, B, C, $\overline{A}$, $\overline{B}$, $\overline{C}$ of the drive control signal 103a are necessary. Because A and $\overline{A}$, B and $\overline{B}$, and C and $\overline{C}$ have the reverse relationship to each other, making the direction of polarization reverse enables one to obtain equal operation by using three kinds of the drive control signal 103a.

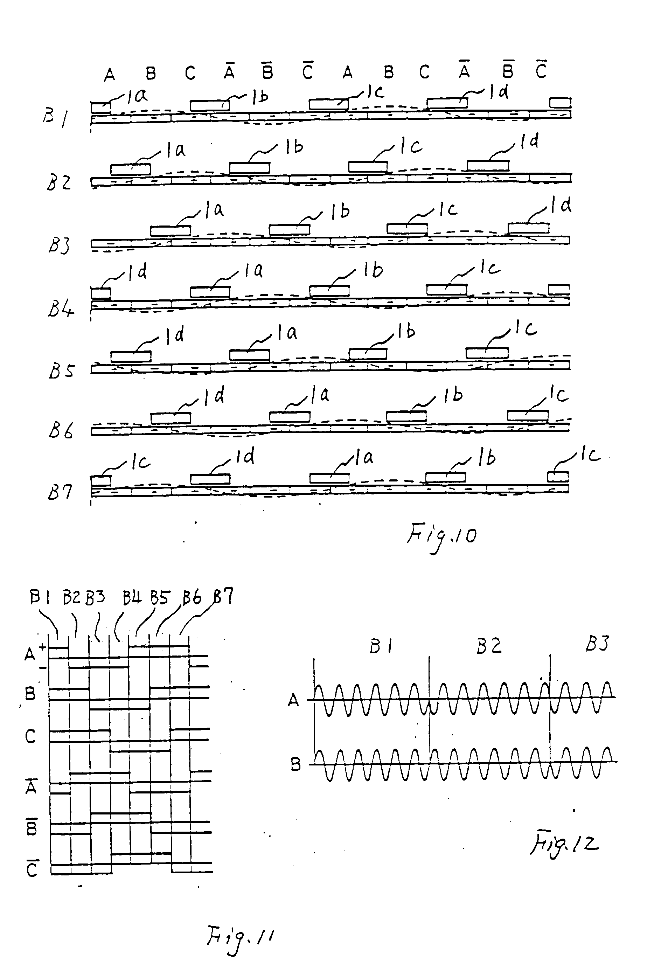

As shown in Figure 12 of the timing chart of the driving voltage impressed on the vibration devices A and B, for example, the vibration mode B2 impresses drive voltages of reverse phases on the vibration device A, and the vibration mode B3 impresses drive voltages of reverse phases thereon. The driving voltage in each vibration mode is a sine wave and its frequency is identical to the resonance frequency of the stator provided with the vibration devices attached thereto.

As is clear from the explanation above, by suitably changing the phase of the driving voltages to be impressed on the respective vibrating devices, a stepwise driving can be obtained of twelve sections or divisions per one revolution of the rotor.

Figure 13 shows a third embodiment of an ultrasonic step motor according to the present invention. The vibrator 107 (Figure 1) consists of four vibrating devices, A, $\overline{A}$, B, $\overline{B}$. The rotor 1 comes into contact with two nodes of the stator 2 through two contactors 1a and 1b, there being eight positions at which the nodes N can be formed.

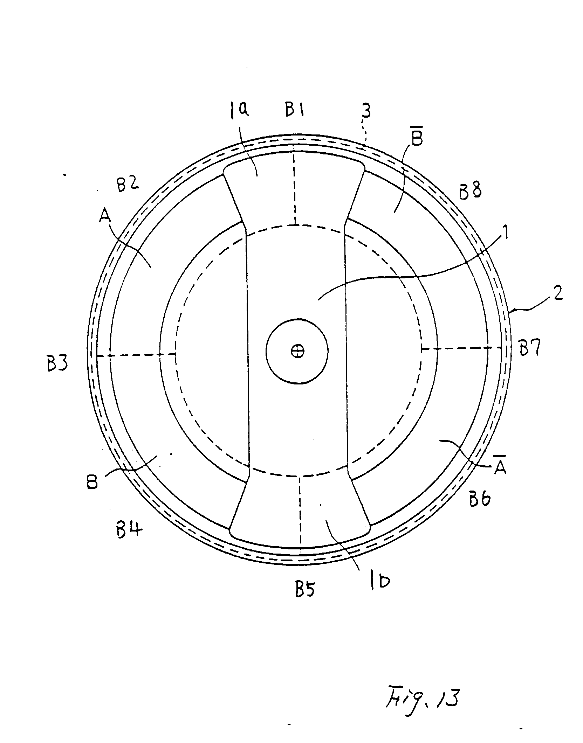

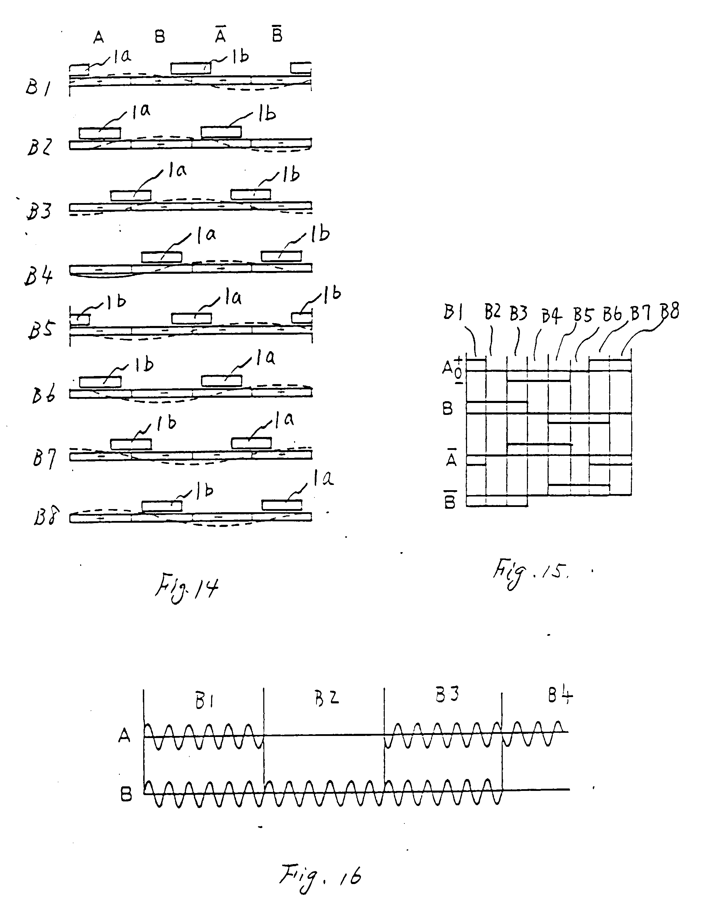

Figure 14 illustrates the positional relationship between the contactors 1a and 1b and the particular vibration mode. A timing chart of the phase of the drive voltage for creating the vibration mode is shown in Figure 14, and another timing chart of the drive voltage impressed on the vibrating devices A and B is shown in Figure 16. "+" and "-" in Figure 15 show reverse phases and "O" indicates a condition in which no drive voltage is impressed. Consequently, according to this embodiment, an ultrasonic step motor of eight divided steps per one rotation (1/2 step) is provided.

The embodiments above concern rotary-type motors. However, when the rotor can be shifted to the driving node and the driving condition of the vibrator sequentially changes in order to shift the rotor stepwise, various types of motor, various shape of vibration modes, and various kinds and constructions of the vibrator can be provided.

In addition, the oscillation circuit 105 can use the output of the crystal oscillation circuit 101 or can use a self-excitation oscillation circuit adapted to detect vibration of the vibrator 107 so as to resonate it at the most suitable condition. There is no difficulty if the control signal 102a is not based on the signal of the crystal vibrator 100.

Because there is friction between the rotor and the stator of the ultrasonic step motor after it moves to the desired position, it is kept at its stop position after the driving stops.

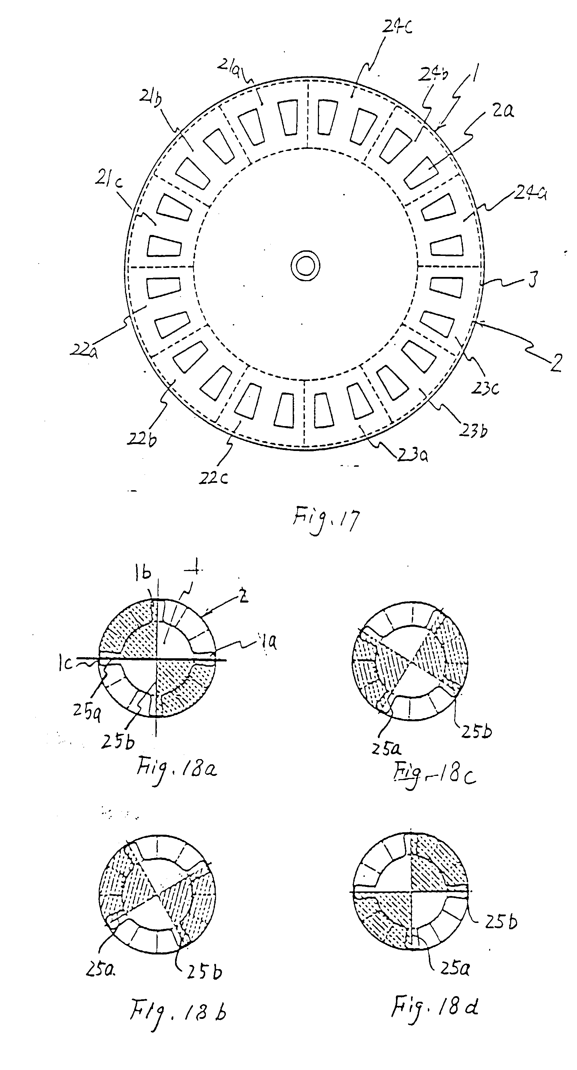

Another embodiment of the stator 2 is shown in Figure 17. The stator 2 has twenty four (24) projections 2a. The piezo-electric element 3 attached to the stator 2 consists of, for example, twelve (12) vibrating devices 21a, 21b, 21c, 22a, 22b, 22c, 23a, 23b, 23c, 24a, 24b, and 24c. Operation of these vibrating devices corresponds to the operation of the stator illustrated in Figures 6a - 6d. It is sufficient for the projections 1a - 1d of the rotor 1 to be contacted only partly by the stator 2 as shown. Consequently, these projections may project in the thickness direction of the rotor or in the diameter direction of the stator 2.

Figures 18a - 18d illustrate the relationship between the vibration mode of the stator and the rotor when the motor of Figure 17 is driven as shown in Figures 6a - 6d. The stator 2 has two node diameters 25a and 25b and the projections 1a - 1d of the rotor 1 are stable at their positions corresponding to the node diameters 25a and 25b. The vibration mode has two portions one of which is hatched and the other of which is not hatched, and these modes are of opposite phases. These said portions change in sequence as shown in Figures 18a - 18d, so that the rotor 1 rotates stepwise by 30 degrees a step.

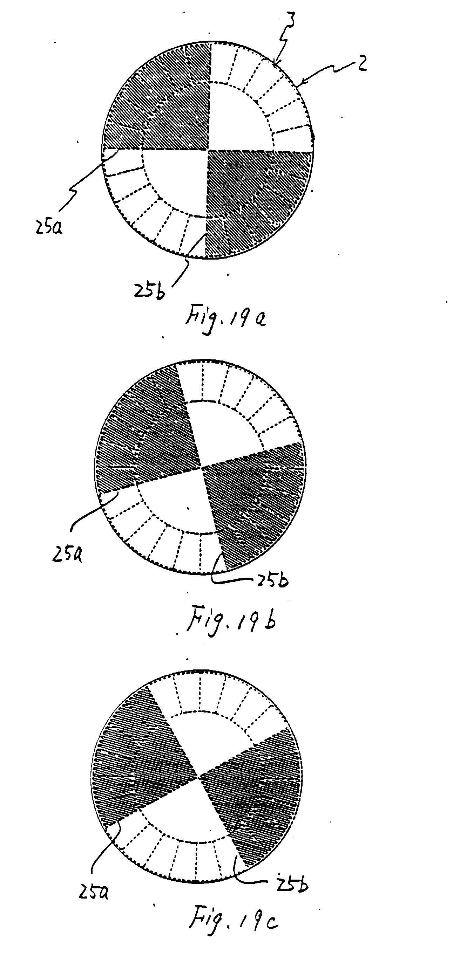

Figures 19a - 19c illustrate the operation of an embodiment of the ultrasonic step motor which has a different step angle (15 degrees) from that of the embodiment shown in Figures 18a - 18d. The piezo-electric element 3 attached to the stator 2 has twenty four (24) vibrating devices 108. In this construction, driving two groups of twelve vibrating devices 108 shifted one by one produces two node diameters 25a and 25b, and the vibration mode of the motor changes as shown.

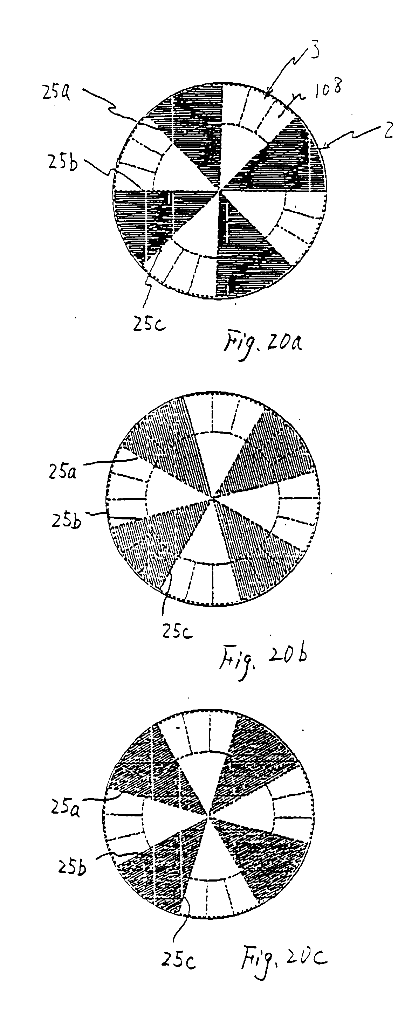

Another embodiment of vibration mode of the stator of the ultrasonic step motor is shown in Figures 20a - 20c. The piezo-electric element 3 attached to the stator 2 consists of twenty four (24) vibrating devices. Four sets, of three adjacent devices each, are grouped into a group, and the remaining twelve devices of the other three adjacent devices are assigned to another group. When they are driven, three node diameters 25a, 25b, and 25c can be formed. By driving the groups of vibrating devices shifted one by one, it is possible to attain a stepwise drive of 15 degrees per step. In this case, a vibration mode of 4λ can be produced.

As described above, it is possible to suitably set the step angle of the ultrasonic step motor according to number of the vibrating devices and the driving method. The step angle is not limited to that of the various embodiments described above.

A drive control system for the step motor will now be explained.

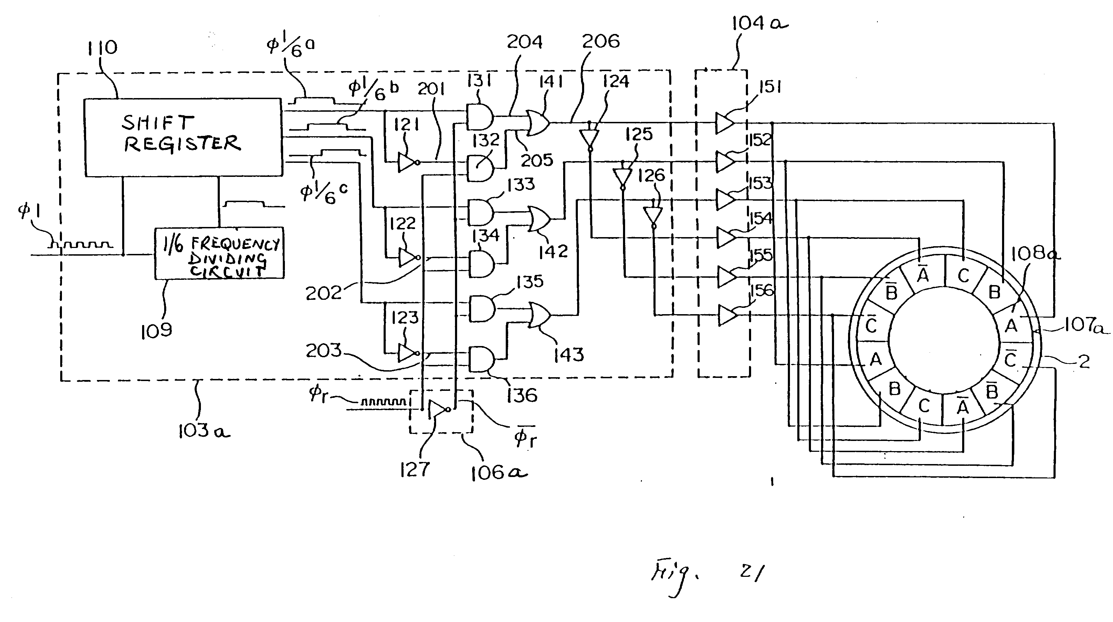

Figure 21 is a circuit diagram of a drive control circuit 103a for an ultrasonic step motor of the present invention, which circuit 103a consists of a 1/6 frequency dividing circuit 109; a shift register 110; invertors 121, 122, 123, 124, 125, and 126; AND gates 131, 132, 133, 134, 135, and 136; and OR gates 141, 142, and 143. A phase invertor 106a consists of an invertor 127. A driver 104a consists of buffers 151, 152, 153, 154, 155, and 156 and outputs drive voltages. A vibrator 107a is attached to the stator 2 and consists of a plurality of vibrating devices 108a.

The circuit shown in Figure 21 drives the ultrasonic step motor one step (30 degrees) per second, which motor has 2λ vibration modes at twelve divided steps per one rotation. A crystal oscillation circuit (not shown) and a frequency division circuit (not shown) are used in the circuit shown in Figure 21. The crystal oscillation circuit 101 and the frequency division circuit 102, respectively, which are shown in Figure 1 and which correspond to that of a conventional electronic clock, can be used. The oscillation circuit 105 of Figure 1 of a CR type or a self-excitation type can be used.

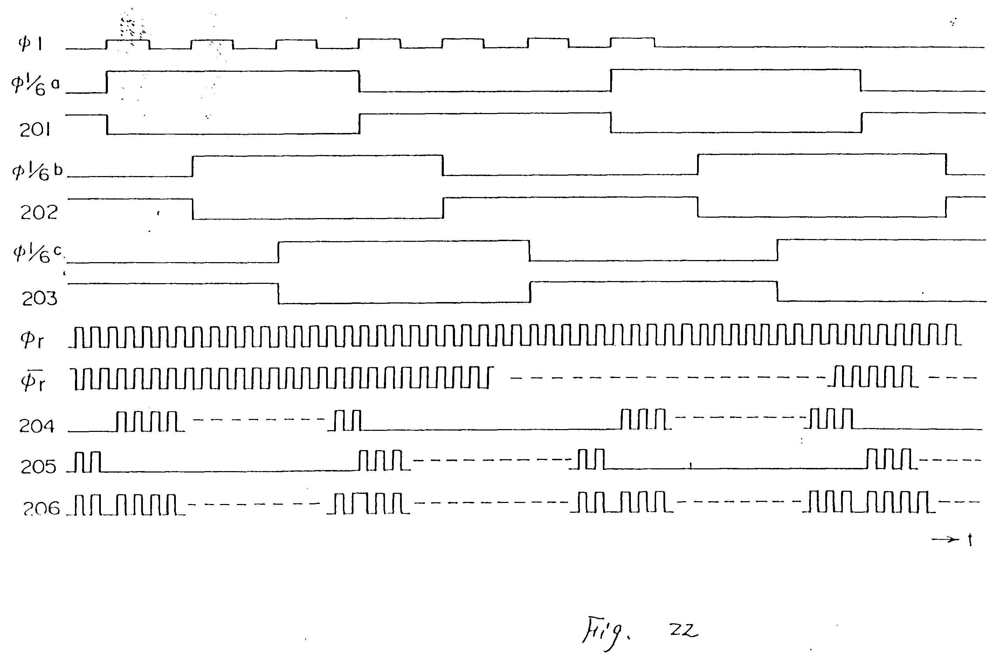

Figure 22 is a timing chart showing the operation of the drive control circuit of Figure 21. When a control signal φ1 of 1Hz which has issued from the frequency division circuit 102 shown in Figure 1 is inputted to the 1/6 frequency division circuit 109 and the shift register 110, signals are outputted from the 1/6 frequency division circuit 109 after being divided to 1/6 and the divided signal is supplied to the shift register 110. The shift register 110 outputs signals φ1/6a, φ1/6b, and φ1/6c of 1/6 Hz having phases shifted by one second and reversed in phase every three seconds.

The signal φ1/6a is inputted to the AND gate 132. The signal φ1/6a is also inverted by the invertor 121, and the resultant signal 201 is inputted to the AND gate 132. An output signal φr from the phase inverting circuit 106a is inputted to the AND gate 131 and an oscillation signal φr from the oscillation circuit 105 is inputted to the AND gate 132. As a result, an output signal 204 consisting of a logic multiplication of the signal φ1/6a and the oscillation signal or is obtained from the AND gate 131. An output signal 205 consisting of an inverted signal 201 of the signal φ1/6a and the oscillation signal φr is obtained from the AND gate 132. These output signals 204 and 205 are supplied to the buffer 151 through the OR gate 141 and fed to the buffer 154 through the invertor 124.

Operation of the motor based on the signals φ1/6b, φ1/6c is basically identical to that of the operation based on the signal φ1/6a. The inverted signals 202, 203 are processed in a manner similar to the signal φ1/6a, and drive control signals inputted to the buffers 152, 153, 155, and 156 become ones having phases respectively shifted by one second relative to drive control signals of the vibrating devices A, $\overline{A}$. This results in outputs of drive voltages of six kinds from the driver 104. Each buffer impresses drive voltages, oscillating at a frequency of the oscillation signal φr according to the drive control signal, on the vibrating devices 108a, and two vibrating devices 108a are driven in an instant. Consequently, vibrating devices are driven three by three in the same phase or in reverse phase. A vibration of deflection 2λ is generated, and as a result the rotor 1 is driven stepwise.

An ideal waveform for the drive voltage is that of a sine wave. In order to make the waveform of the drive voltage a sine wave, a filter circuit not shown is provided through which a frequency component of the oscillation signal ϕr passes, for example, after the output of the driver 104.

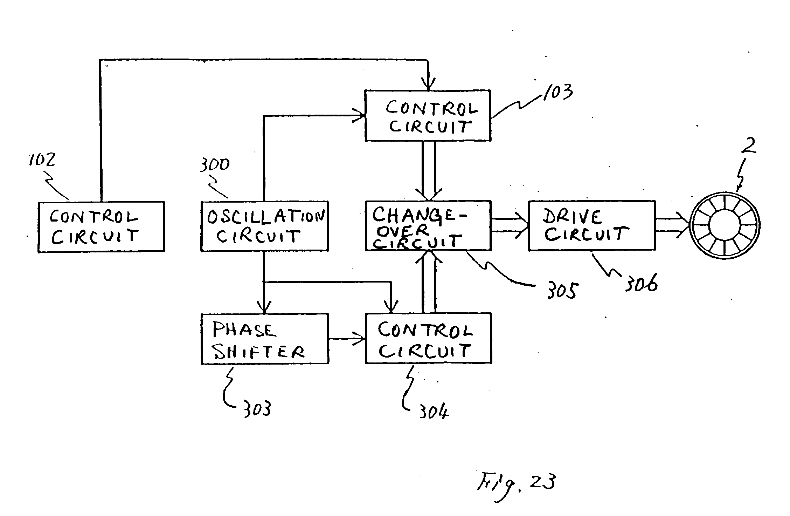

Figure 23 is a block diagram showing a control circuit of an ultrasonic step motor according to another embodiment of the present invention. In the case of the circuit shown in Figure 23, it is possible to select at will either stepwise drive or continuous drive.

In Figure 23, there is shown an oscillation circuit 300 for creating signals oscillating the stator 2 to which vibrating devices 3 are attached; a phase shifter 303 for shifting the phase by 90 degrees; and a control circuit 304 for generating an advancing wave of drive waveshape. A change-over circuit 305 supplies to a drive circuit 306 outputs of a control circuit 103b when a stepwise drive is used, and outputs of another control circuit 304 when a continuous drive is used, in order to oscillate the stator 2.

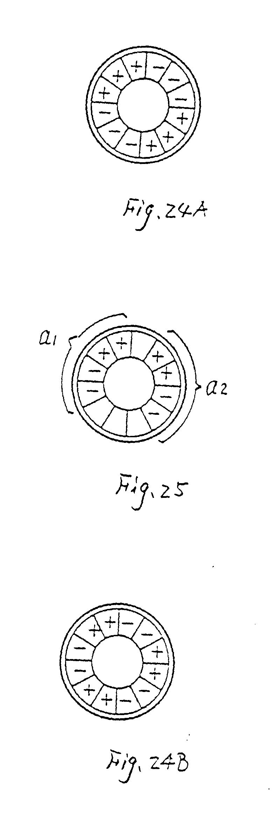

Figure 24A is a view illustrating an oscillation process when a standing wave of 2λ of an oscillation mode (oscillation figure of two wave lengths) is generated in the stator. The vibrating devices are deformed three by three at "+" and "-" reverse phases, so that oscillation nodes are generated. In the case of stepwise vibration, the projections of the rotor are forced towards the node positons, and this is attained by gradually shifting the combination of the vibrating devices which are simultaneously driven. Deformation of "+" and "-" can be attained by selecting positive and negative voltages or inverting the polarizing direction.

Figure 24B is a view illustrating the case in which the stator is oscillated at a vibration mode of 3λ and the vibrating devices are driven two by two, resulting in generation of three nodes.

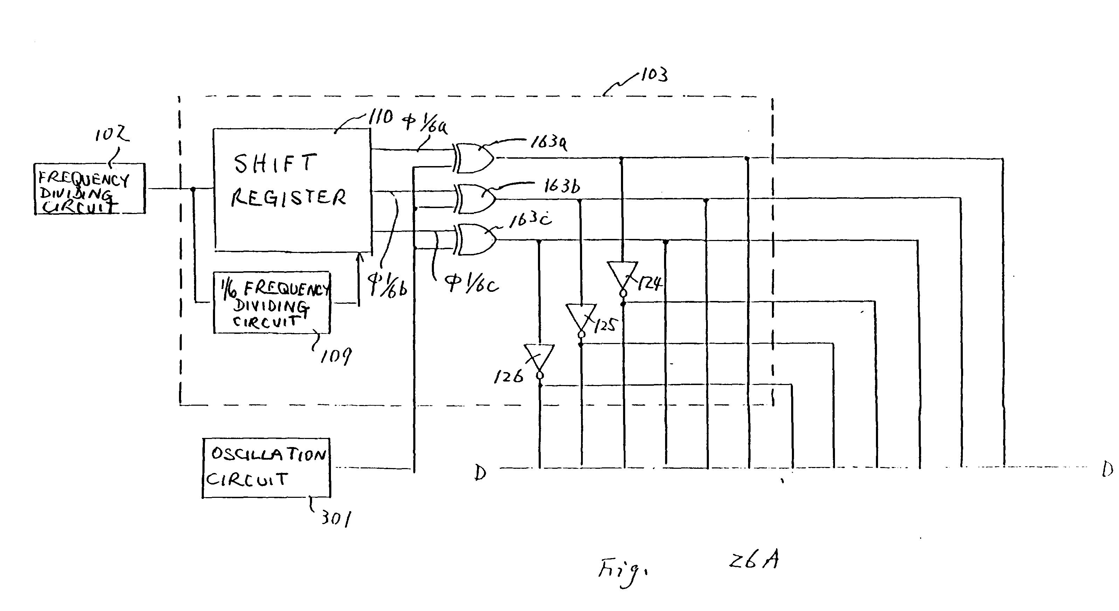

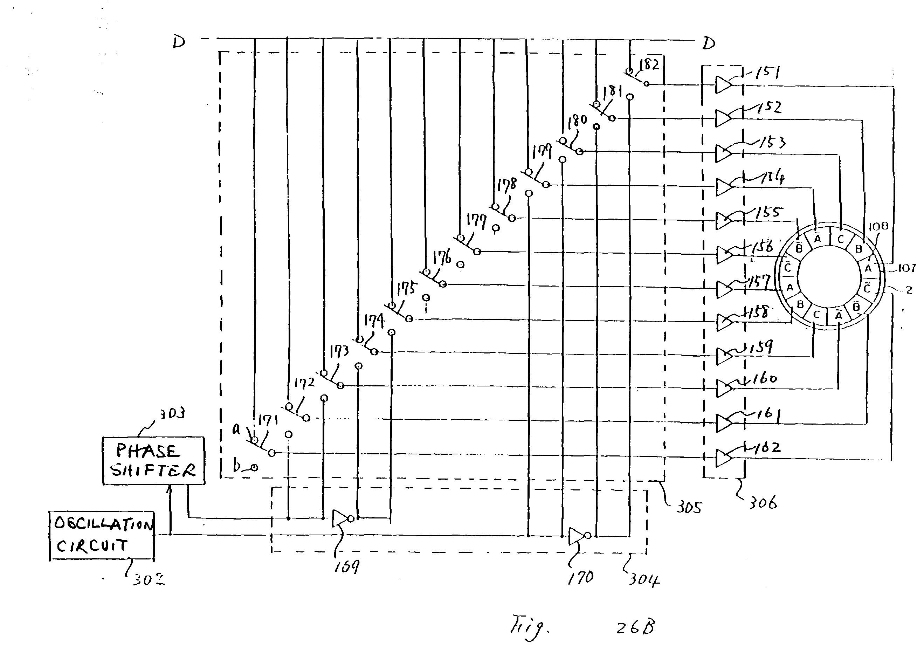

Figure 25 is a view illustrating the case in which the stator is oscillated at an oscillation mode of 3λ. The "a1" parts are made standard ones, and are impressed with a waveform of a phase shifted by 90 degrees, and another waveform reversed with respect to the former wave shape is impressed on the "a2" parts which are separated by 1/4λ from the "a1" parts.

A characteristic of this embodiment resides in the changing-over between an advancing wave and a standing wave, so that the oscillation mode is not limited to the mode described in the previous embodiments.

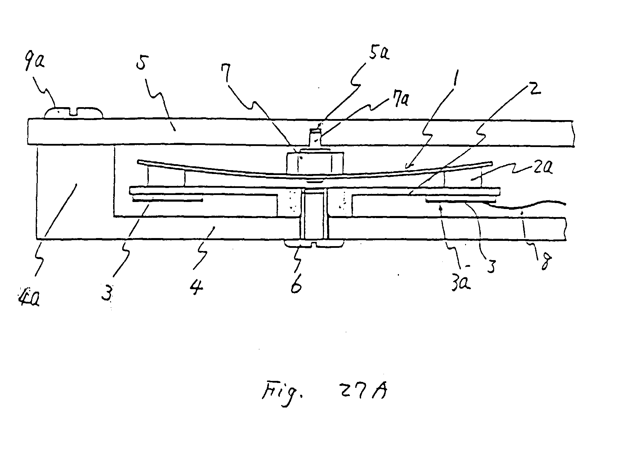

Figures 26A and 26B show circuits of the embodiment of oscillation circuit whose block diagram is shown in Figure 23. A change-over between a 2λ standing wave and a 3λ advancing wave will be explained with reference to the drawings of Figures 26A and 26B. As clearly shown, the oscillation circuit 300 has two oscillation circuits 301 and 302, respectively for 2λ and 3λ and the phase shifter 303 generates waveforms shifted by a phase of 90 degrees relative to the waveform of the oscillation circuit 302.

The change-over circuit 305 has switches 171-182 corresponding to the drives 151 - 162 of the driver circuit 306 for driving the vibration elements of the vibrating device 3 attached to the stator 2.

Exclusive - Or operation circuits 163a - 163c, respectively, shown in Figure 26A have functions similar to that of the invertors 121 - 123, AND circuits 131 - 136, and OR circuits 141 - 143 corresponding to those of Figure 21, and they are substantially the same.

Stepwise driving or feeding by an oscillation mode of a standing wave will now be explained.

In this case, the switches 171 - 182 are adapted to cooperate. In the case of stepwise driving, these switches are all turned to the "a" side or the side of the control circuit 103. This situation is substantially the same as that of the circuit shown in Figure 21. Various parts of the circuit function according to the timing chart shown in Figure 22 and it is possible to feed the rotor stepwise by 30 degrees.

Next, the case in which the rotor continuously rotates with an advancing wave vibration mode will be explained. The oscillation circuit 302 oscillates at a resonant frequency of 3λ and the phase shifter 303 generates signals shifted by 90 degrees. The switches 171 - 182 of the change-over circuit 305 are cooperatively turned to the "b" side. The control circuit 304 has invertors 169 - 170 in order to generate inverted wave forms of the phase shifter 303 and the oscillation circuit 302, and the waveforms are supplied to the vibrating device 108.

Consequently, a vibration mode of a 3λ advancing wave is achieved and the rotor continuously rotates. Various methods have been proposed to generate advancing waves and these methods are well known, so the method for generating advancing waves is not limited to that described above. The embodiment employs a combination of a standing wave of 2λ and an advancing wave of 3λ. However any other combination can be used on condition that the standing wave and the advancing wave can be changed-over and oscillated.

It is possible to reverse the direction of movement of the node positions when a stepwise drive is used, to invert the phases of drive waveform to be impressed to either one when a continuous drive is used, and to reverse the direction of the advancing wave, in order to reverse the direction of rotation of the motor.

It is to be understood that the difference between the stepwise drive and the continuous drive merely concerns the particular driving method for the motor, so that the motor which can be driven stepwise can also be used as a continuously driven motor.

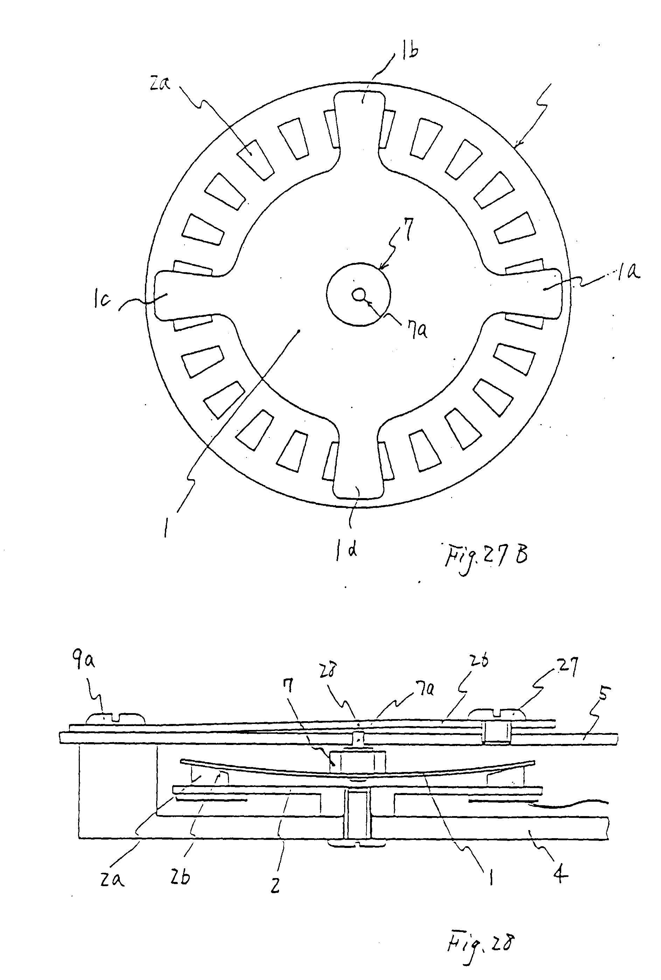

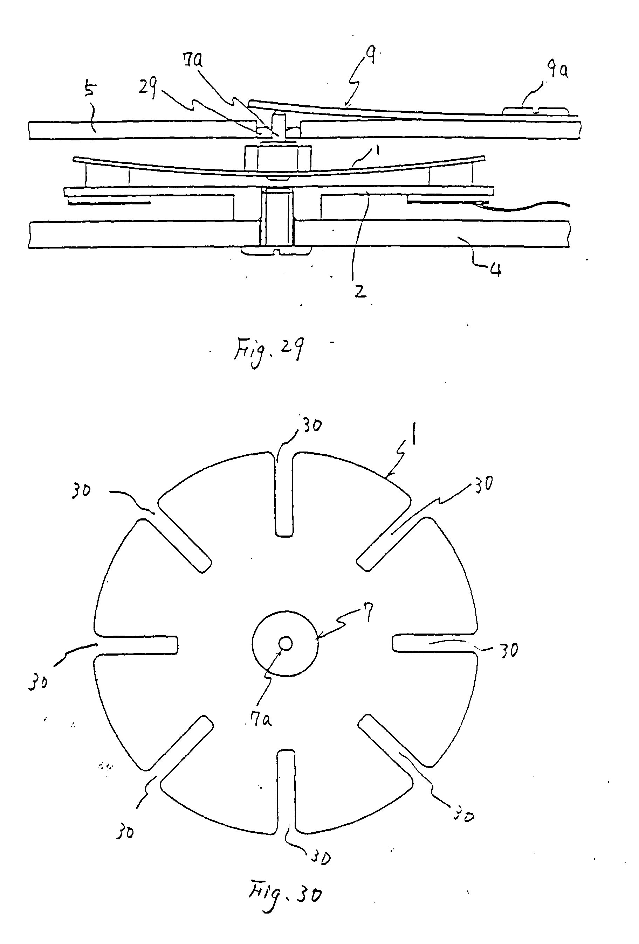

Figure 27A is a sectional view of a fourth embodiment of an ultrasonic motor according to the present invention. In this embodiment, the rotor 1 comes in contact with a projection 2a of the stator 2 and is frictionally driven by means of oscillation displacement. A pinion 7 is mounted on the rotor 1 so as to pick up the rotational force thereof. The positions of a stud 7a of the pinion 7 in its tranverse direction and its height or vertical direction, are determined by a wheel-train support 5. The gap between the wheel-train support 5 and a base plate 4 is determined by a projection 4a of the base plate 4 to which the support 5 is secured by a set screw 9a.

The rotor 1 comprises a resilient member, is deformed as shown, and comes in contact with the projection 2a of the stator 2. Because the degree or amount of deformation of the rotor 1 is bound to be more than the estimated variation in height of the projection 2a, a stable contact condition is obtained. Owing to the elasticity of the rotor 1, a suitable pressure force contributing to the contact condition is obtained and a stable friction force is also obtained. Because the wheel-train support 5 gives pressure forces to the rotor in this embodiment of the ultrasonic motor, a separate member for providing the pressure force is not necessary.

Figure 27B is a plan view showing the relationship between the rotor 1 and the stator 2 of the ultrasonic motor of Figure 27A. A plurality of the projections 2a formed on the stator 2 and the four projections 1a - 1d on the rotor 1 come into contact with each other. In such a construction, the flexibility of the projections 1a - 1d is adjusted according to the width of these projections, and inertia of the rotor can also be reduced.

Figure 28 is a sectional view of a fifth embodiment of an ultrasonic motor according to the present invention. The height of a pressure plate 26 which is secured to the base plate 4 together with the wheel-train support 5 is controlled by rotating an adjusting screw 27. As a result of such rotation, the height of the portion 28 of the plate 26 which comes in contact with the top of the pivot 7a of the pinion 7 is changed, whereby the deflection of the rotor 1 is controlled. Consequently, the pressure force between the projection 2a of the stator 2 and the rotor 1 can be controlled. In the construction of this embodiment, there are reliefs 2b on the projections 2a at their inner sides, so that the latter are prevented from coming into contact with the rotor 1. Consequently, even though the rotor 1 deflects, the rotor can come in contact with the stator 2 only at the outer diameter sides of the projections 2a.

Figure 29 is a sectional view of a sixth embodiment of an ultrasonic motor according to the present invention. The ultrasonic motor of this embodiment employs a flexible rotor 1 and, additionally a pressure or holding spring 9 for making the pressure force stable, and a jewel bearing 29 for rotatably supporting the pivot 7a with low friction.

Figure 30 is a plan view of the rotor 1 of Figure 29 showing a plurality of slits 30 therein for increasing the flexibility of the rotor 1. Figure 30 also shows the pinion 7 having the pivot 7a.

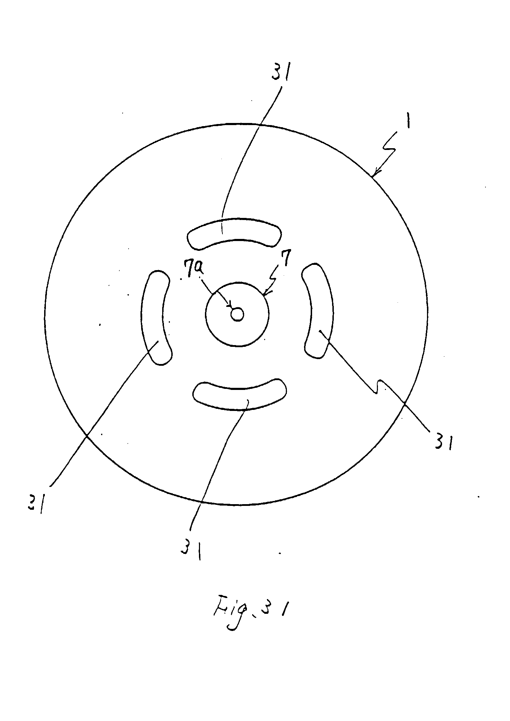

Figure 31 is a plan view of another rotor which may be used in an ultrasonic motor according to the present invention, which rotor 1 has openings 31. Figure 31 also shows the pinion 7 provided with the pivot 7a.

Although ultrasonic motors using flexible rotors have been described, the shape of the rotor is not limited to one having spring portions, slits, and openings and, for example, a simple disc can be used as the rotor so long as it has flexibility. Moreover, although embodiments using piezo-electric elements as sources of ultrasonic oscillation have been described, it is possible to use magnetic strain elements and the like as the oscillation source. Concerning the type of the motor, it is possible to use that of a linear type, in addition to the rotary type described above.

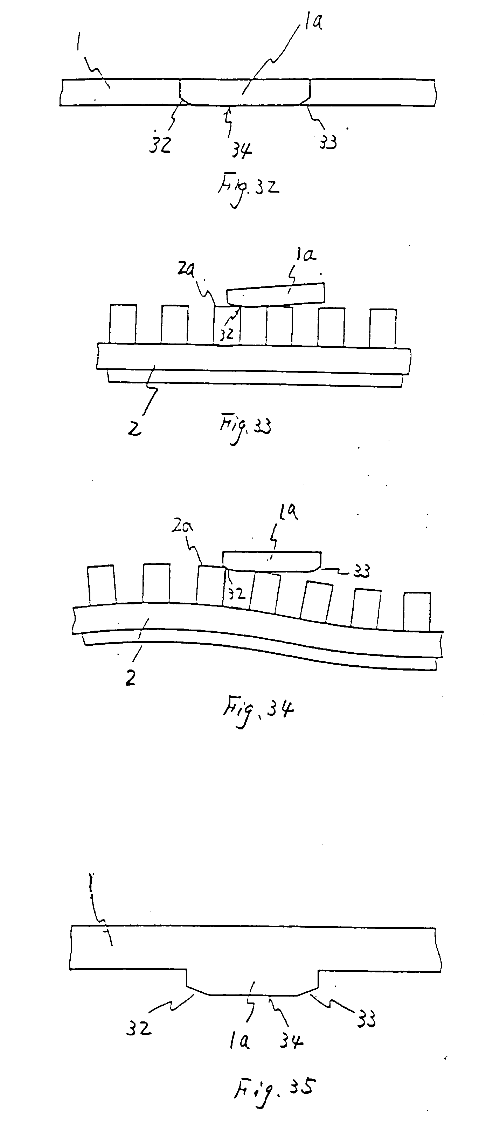

Figure 32 is a side elevation showing a construction of the rotor 1 of, for example, Figure 27A, in which construction reliefs 32 and 33 are formed at the corners of the sliding face 32 of the projection 1a of the rotor 1, which sliding face comes into contact with the projections 2a of the stator 2. The sliding faces of other projections 1b, 1c and 1d have a similar shape.

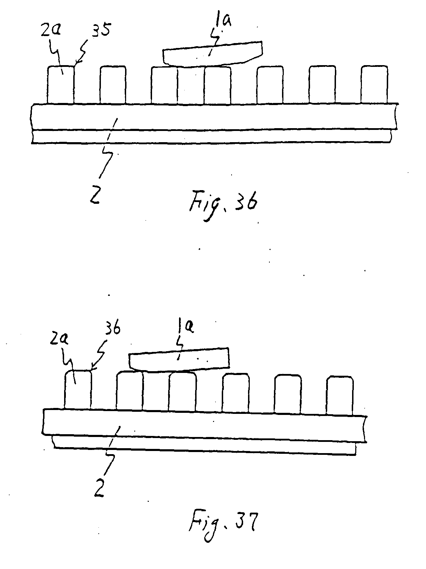

Figure 33 is a diagrammatic view showing the relationship between the relief 32 of the projection 1a of the rotor 1 and the projection 2a of the stator 2. As shown, even though the surface of the projection 1a is slanting, the relieved corner 32 of the projection comes into contact with the rotor 1 without any interference, so that the rotor 1 can slide smoothly. When the rotor 1 needs to move in only one direction, or the rotor 1 is prevented from moving in the reverse direction, it is sufficient to provide one relief at a corner as shown. The relief can be made by any method, such as machining, press rolling, or bending.

Figure 34 is another diagrammatic view illustrating the relationship between the relief 32 of the projection 1a and the projection 2a of the stator so that interference therebetween is prevented. The projection 1a has reliefs 32 and 33 at opposite corners.

As is apparent from the embodiments described above, the purpose of the reliefs 32 or 33 is to prevent the corners of the projections 1a and 2a of the rotor and the stator from interfering, so that the positions of these reliefs is not limited to those of these embodiments. In general, the number of projections to be formed on the rotor is fewer when the stator and the size of the projections on the rotor are large, so that it is easy to make these projections.

Figure 35 is a side elevation showing another embodiment of a projection of the rotor. As shown, the projection 1a extends in the thickness direction of the rotor 3 and the projection 1a has reliefs 32, 33 and a slide face 34. The purpose of forming such reliefs and slide face is to make the contact surface of the rotor 1 with the stator 2 narrow or partial, so that any shape or construction of the stator and rotor is permitted provided that this purpose is attained.

Figure 36 is still another embodiment of a rotor and stator showing, in addition to the construction above of the rotor, a projection 2a of the stator 2 which has a curved relieved portion 35. Figure 37 is still another such embodiment having a slanted relieved portion 36.

According to the embodiments shown in Figures 36 and 37, reliefs are formed on both projections 1a and 2a of the rotor and the stator, so as to obtain a more stable drive of the motor.

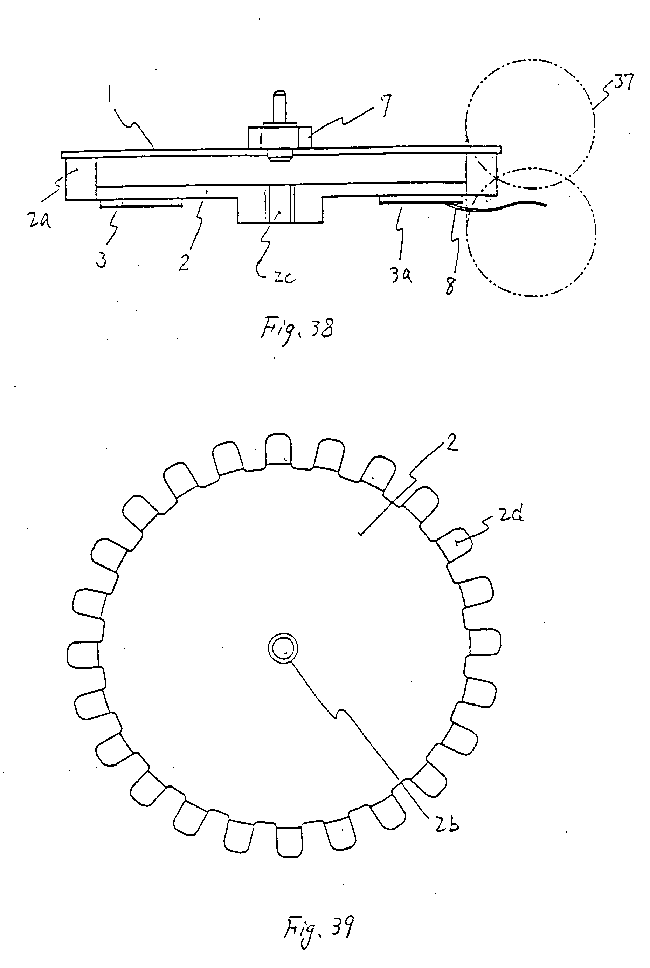

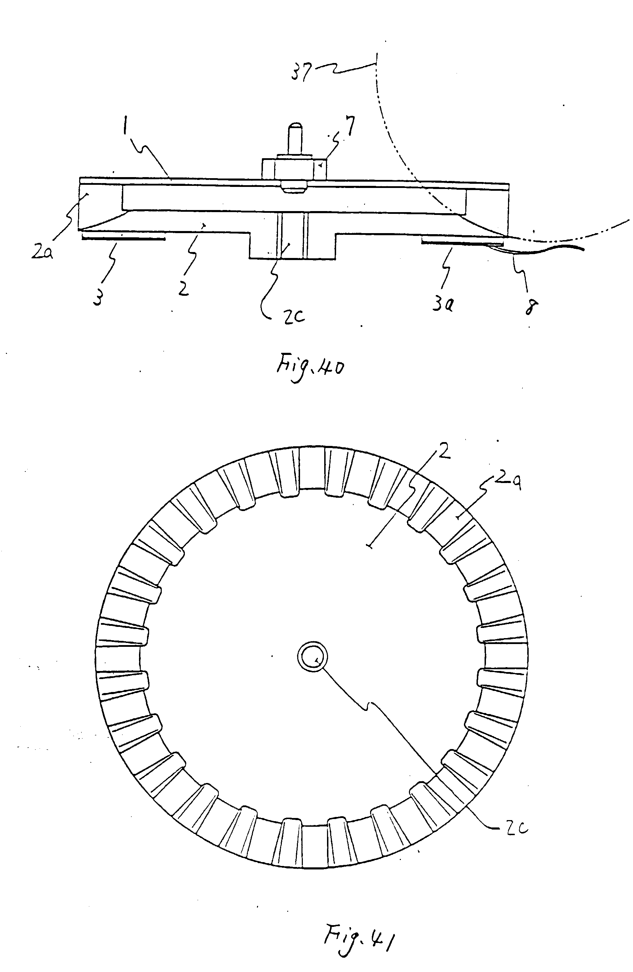

Figure 38 is a sectional view of a seventh embodiment of an ultrasonic motor according to the present invention, and Figure 39 shows a plan view of the stator thereof. In this embodiment, there is a threaded portion 2c at the centre of the stator 2. The projections 2a and 2d on the stator 2 protrude in the directions of the diameter and the thickness of the stator 2. The projections are formed by, for example, moving a tooth forming or generating cutter 37 as shown by broken lines and simultaneously rotating the stator 2. Thus, projections 2d are formed around the circumference of the stator 2.

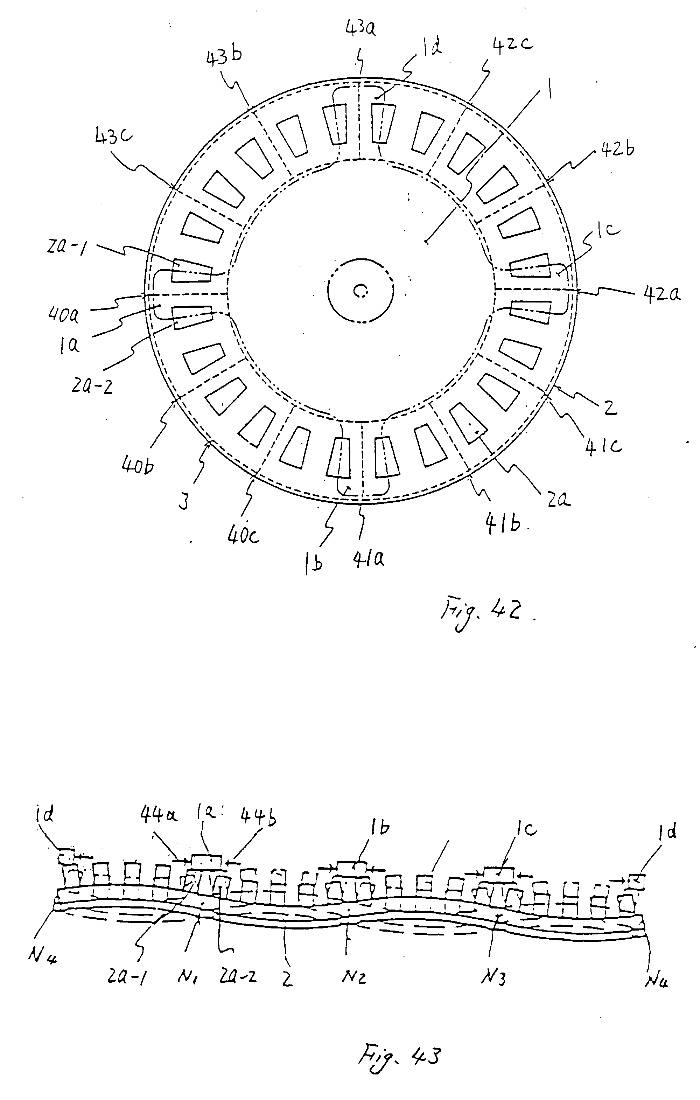

Figure 40 is a sectional view of an eighth embodiment of an ultrasonic motor according to the present invention, and Figure 41 is a plan view of the stator 2 of the ultrasonic motor of Figure 40. The stator 2 may be formed in practice by using another tooth generating cutter 37 which stops in its movement at the position shown by broken lines. As a result, the projections are not formed in the diametric direction, but part of the projections 2a are thinned, so decreasing the rigidity of the projections. Thus the oscillation amplitude can be made large without difficulty.

Figure 42 is a top plan view of a stator 2 of an ultrasonic step motor of still another embodiment. In Figure 42, the chain double-dashed lines show a rotor 1 and the broken lines show a border of a piezo-electric element 3 and an electrode pattern. A plurality of projections 2a, which are provided to enlarge the oscillation amplitude in the circumference direction of the stator 2, come in contact with the rotor 1. According to this embodiment, twenty four (24) projections come in contact with four projections 1a - 1d on the rotor 1. The electrode pattern of the piezo-electric element 3 is divided, for example, into twelve parts by twelve border lines 40a- 40c, 41a - 41c, 42a - 42c, and 43a - 43c. It is to be understood that the projections 2a do not overlap the border lines of the electrode pattern and that two projections 12a face each border line.

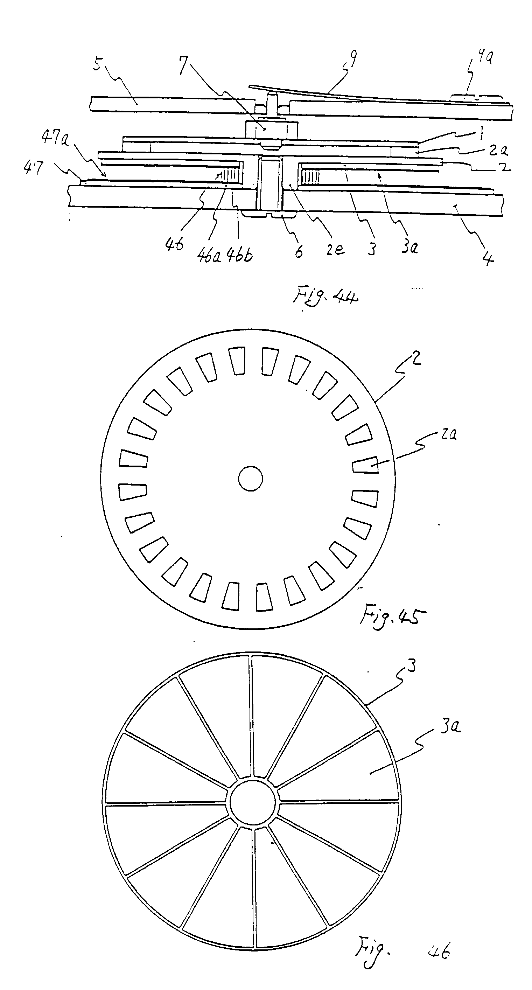

Figure 43 is a diagrammatic view showing the operation of the ultrasonic step motor of Figure 42, in which the disc-shaped stator 2 is developed linearly.

As shown, four projections 1a, 1b, 1c, and 1d formed on the rotor 1 come into contact with the projections 2a forming four nodes $N_1$, $N_2$, $N_3$, and $N_4$. It is to be noted that the stator 2 is expanded after cutting through the projection 1d and the node $N_4$. The broken lines and solid lines show reversed phases of oscillation of the stator 2. The rotor 1 of such a construction has inertia, so that, for example, the projection 1a receives alternately driving forces 40a and 40b from the projections 2a - 1, 2a - 2 and the rotor stops when the forces are balanced. Consequently, the four projections 1a - 1d stop at the positions of the nodes $N_1$, $N_2$, $N_3$ and $N_4$. When the positions of a projection and a node are shifted or misaligned, a driving force effective in only one direction functions and one of them moves to another one. The displacement of the projection 2a is enlarged relative to the displacement of the piezo-electric element 3.

The electrode pattern may be divided into twelve parts which is grouped into four groups of three parts. When confronting groups are driven at the same phase and adjacent groups are driven at the opposite phase, an oscillation of 2λ(the number of nodes being four) in the thickness direction is generated and the projections 1a - 1d of the rotor are moved to the position of the neighbouring nodes. Figure 43 shows the condition of the motor in which borders 40a, 41a, 42a, and 43a of the pattern are formed and the respective projections 1a - 1d are moved.

According to the embodiment of Figures 42 and 43, the motors are of the rotary type of ultrasonic step motor. However, the invention can be applied similarly to a linear type ultrasonic step motor without limitation number of the nodes, or the number and shape of the projections.

Figure 44 is a sectional view of a ninth embodiment of an ultrasonic motor according to the present invention. In this embodiment, an electrode pattern 3a and a circuit or wiring pattern 47a on a circuit substrate 47 are led through an anisotropy conductor 46. The conductor 46 has a plurality of rod-shape conductor members 46a, such as metal feelers and cargo feelers, and respective conductor members made of insulators 46b, such as rubber pieces, are separated from each other. The insulators 46b are compressed by securing the base place 4 and the stator 2 together with the holding screw 6 in order to press together the electrode pattern 3a, the circuit pattern 47a, and the conductor member 46a. Then a flange portion 2e of the stator 2 comes into contact with the base plate 4 so that it is possible to ensure a suitable compressed value. The rotor 1 is pressed by a pressure spring 9 secured by a set screw 9a, the pressure spring 9 acting on a pinion 7, and a frictional drive force is thus given to the rotor 1. The rotary force is transferred out of the rotor 1 through the pinion 7.

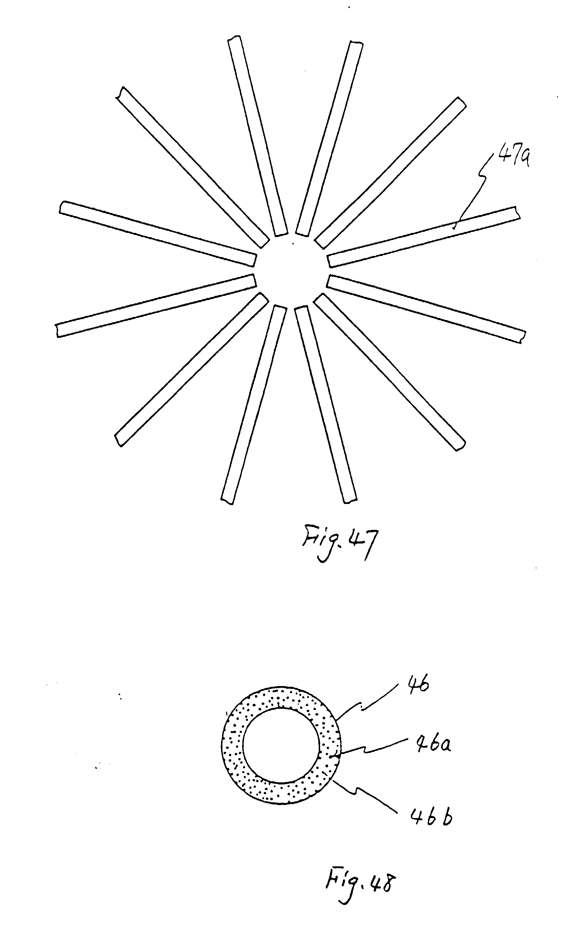

Figure 45 is a plan view showing one embodiment of the stator 2 of Figure 44, which has twenty four (24) comb-like projections 2a.

Figure 46 is a plan view showing one embodiment of the piezo-electric element 3 of Figure 44, and an electrode pattern 3a divided into twelve pieces.

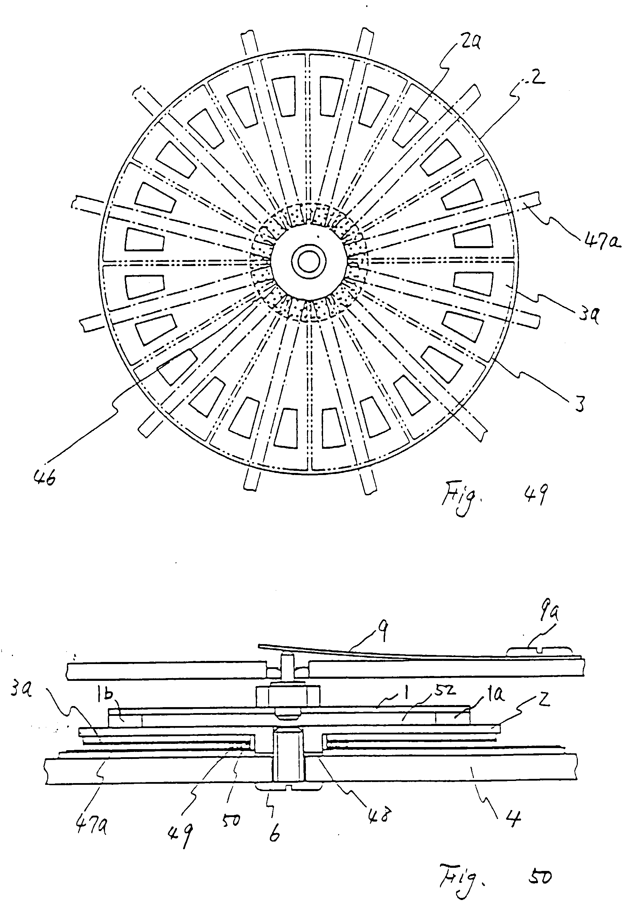

Figure 47 is a plan view showing one embodiment of the wiring pattern 47a of Figure 44 in which twelve wiring patterns 47a extend radially.

Figure 48 is a plan view showing one embodiment of the anisotropy conductor 46 of Figure 44, the plurality of conductor members 46a, and plurality of insulators 46b which provide insulation between the conductor members 46a.

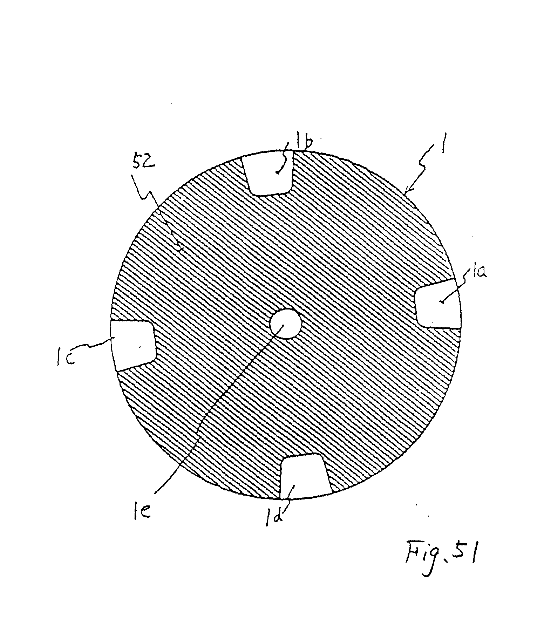

Figure 49 is a plan view of the construction of a stator 2, a piezo-electric element 3, an electrode pattern 3a, a wiring pattern 47a, and an anisotropy conductor 46, respectively being assembled one on top of the other.

Figure 50 is a sectional view showing a tenth embodiment of an ultrasonic motor according to the present invention. The Figure 50 embodiment uses a grain-like conductor member 49 contained in the anisotropy conductor. Between the base plate 4 and the stator 2, there is a space or gap 48. Compression force generated by the set screw 6 is received by the grain-like conductor member 49 so that the wiring pattern 47a and the electrode pattern 3a can be led or connected. The insulator 50 is preferably made of, for example, thermoplastic resin and the like, since it is desirable that the parts should be hardened and adhered to each other at room temperature and separable from each other at high temperature.

It is to be understood that the embodiments described above have twelve electrode patterns and twelve wiring patterns. According to a feature of the present invention, a plurality of electrode patterns and wiring patterns are simultaneously made conductive and there is no limitation on the number of the patterns. The anisotropy conductor mentioned above is intended to refer to any material conductive in the direction of thickness and insulative in a horizontal direction, and any anisotropy material can be used when it has such characteristics. As regards the position at which the anisotropy conductor is placed, it is placed at the centre of the stator in the embodiment above. Any position can, however, be used provided that the wiring pattern and the electrode pattern face each other.

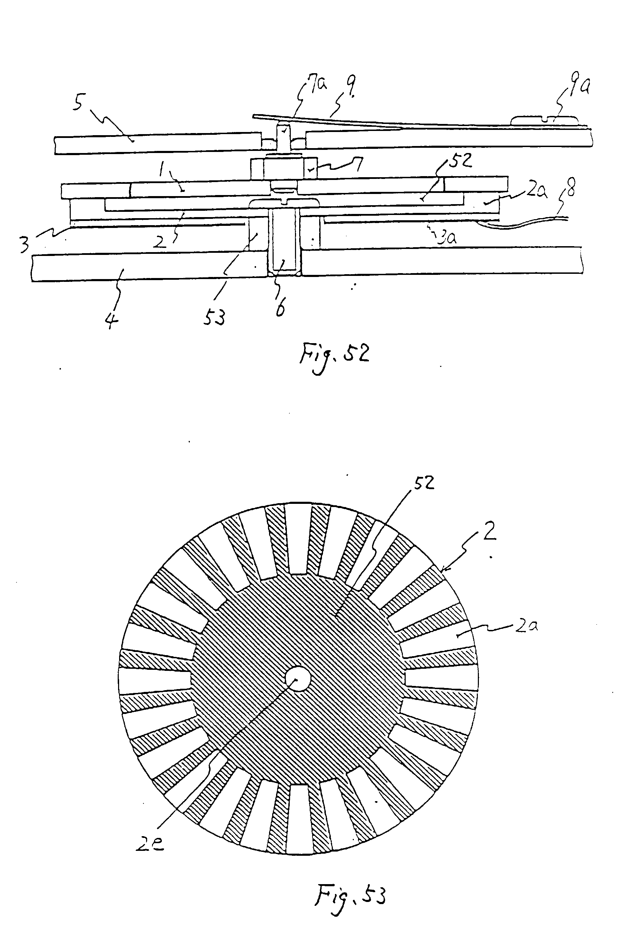

Next, the construction of a rotor suitable to be driven stepwise by movements of standing waves will be described. Figure 51 is a bottom view of the rotor shown in Figure 50. The hatched portion of the rotor 1 shows a relieved portion 52 which has been removed by an etching process, non-hatched portions being constituted by the projections 1a - 1d. A central hole 1e is provided for accommodating the pinion 7.

The piezo-electric element 3 in the embodiments of the ultrasonic motor described above may be made chemically by a spraying, a CVD (chemical vapour deposition) process, or a dipping; or can be made physically by an evaporation or sputtering; or can be made mechanically by a process of compression, shaping, and baking applied to piezo-electric material containing a binder. In addition, it can be manufactured by thermal compression or by adhering the piezo-electric element directly to the stator. In particular, when it is made by using a sputtering method in which a membrane-type piezo-electric element is grown epitaxially to obtain mono-crystalized material, the resultant element has excellent characteristics.

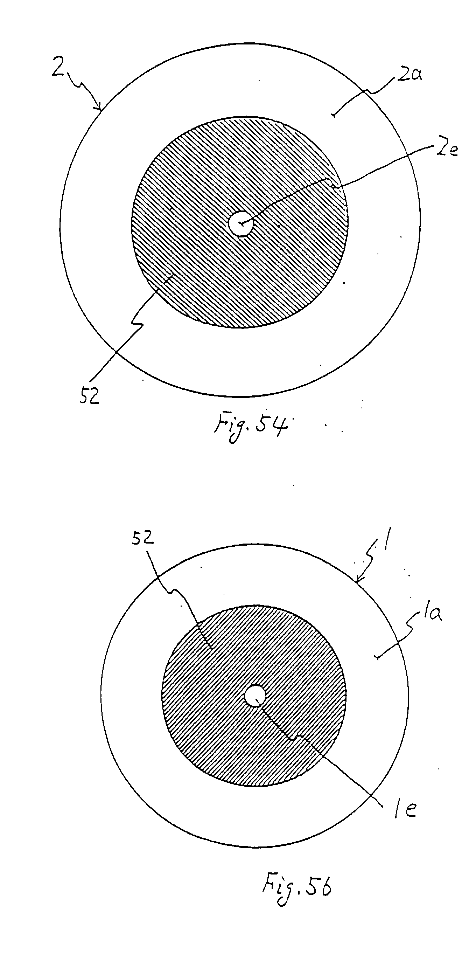

Figure 52 is a sectional view showing an eleventh embodiment of an ultrasonic motor according to the present invention and Figure 53 is a plan view of its stator 2. The hatched portions of Figure 53 indicate relieved portions 52, the non-hatched portions 2a are projections, and the central portion 2e is a hole through which the set screw 6 extends. The stator 2 is secured to the base plate 4 by the set screw 6 which extends through a spacer 53. The relieved portion 52 is formed by an etching process. The piezo-electric element 3 is formed by the process described concerning Figure 51. An ultrasonic motor which has such a construction generates surface waves and which rotates continuously is described in JP-A-61-102177.

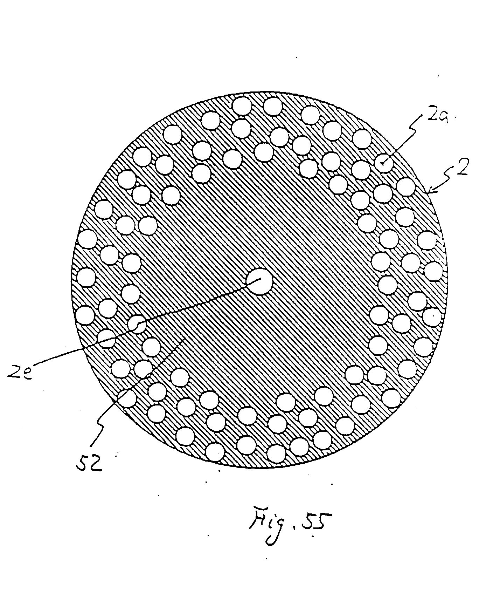

Figures 54 and 55 are plan views of the stator of an ultrasonic motor according to still another embodiment. Because the relieved portion 52 and the projection 2a of the stator 2 are formed by an etching process, it is possible to shape them at will. It is to be understood that the projection 2a functions as described above to enlarge the oscillation displacement and to come partly into contact with the rotor 1.

Figure 56 is a bottom view of the rotor of the ultrasonic motor of still another embodiment, which rotor is adapted to generate surface waves and to rotate continuuously. The rotor 1 is shown as having a relieved portion 52 and a projection 1a in order to make the rotor 1 come into contact with the stator through its peripheral portion, resulting in the obtaining of high torque.

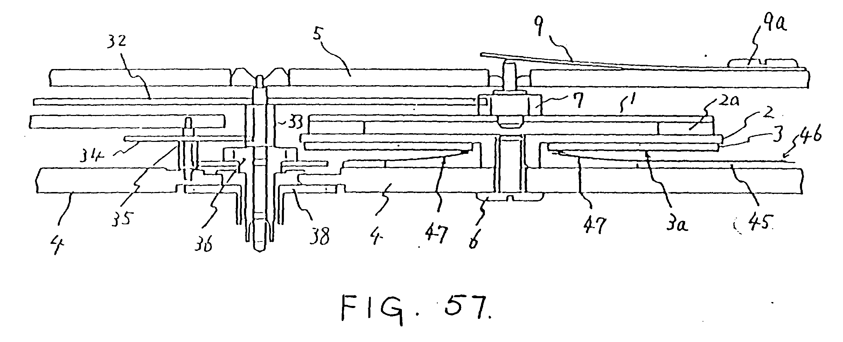

Figure 57 is a sectional view showing a timepiece employing an ultrasonic step motor according to the present invention. Resiliently pressed against the electrode patterns 3a of the piezo-electric unit 3 are overhang portions 47 of circuit patterns 46. The latter are attached to a circuit board 45 and thus the AC voltages from a circuit section (not shown) are applied to the electrode patterns 3a. The stator 2 is therefore caused to vibrate in the flexure mode of vibration and the rotor 1 is rotated by the circumferential, vibrational components at the projections 2a. Its turning force drives a fourth wheel 32 engaging with a seconds hand (not shown) through the pinion 7 of the rotor 1 and it also drives a centre pinion 36 engaging with a minutes hand (not shown) through a third wheel 34. Then, after the rotary speed of the rotor 1 has been decelerated further, it drives a cannon pinion 38 engaging with an hour hand (not shown).

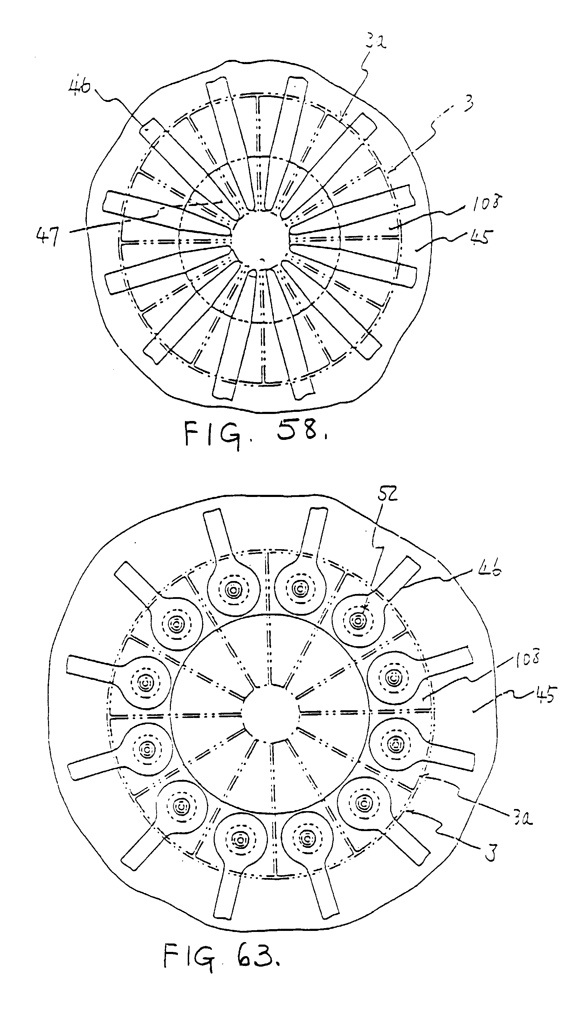

Figure 58 is a plan view showing the relationship between the circuit patterns, the overhang portions and the vibrators in Figure 57. In Figure 58, the dotted lines show the positional relationship between the piezo-electric unit 3 and the electrode patterns 3a. The piezo-electric unit 3 is divided into a plurality of vibrators 108 (twelve vibrators in this embodiment) and each of the vibrators 108 has a separate electrode pattern. Therefore, the circuit patterns 46 arranged on the circuit board 45 are provided in the same number as the electrode patterns. As a result, the vibrators 108 can be driven independently of each other. Of course, the number, layout, form, etc., of the electrode patterns 3a and of the circuit patterns 46 is not limited to that shown in the present embodiment.

With the construction described above, if the stator 2 is mounted with the overhang portions 47 turned up and it is fixed in place with the fastening screw 6, the conduction between the electrode patterns 3a and the circuit patterns 46 is established by the spring force of the overhang portions 47 and the assembly step is easy. Also, even if there are any variations in the height of the turned-up overhang portions, the overhang portions 47 are deformed easily, thus preventing any detrimental effects such as the occurrence of distortion in the stator 2.

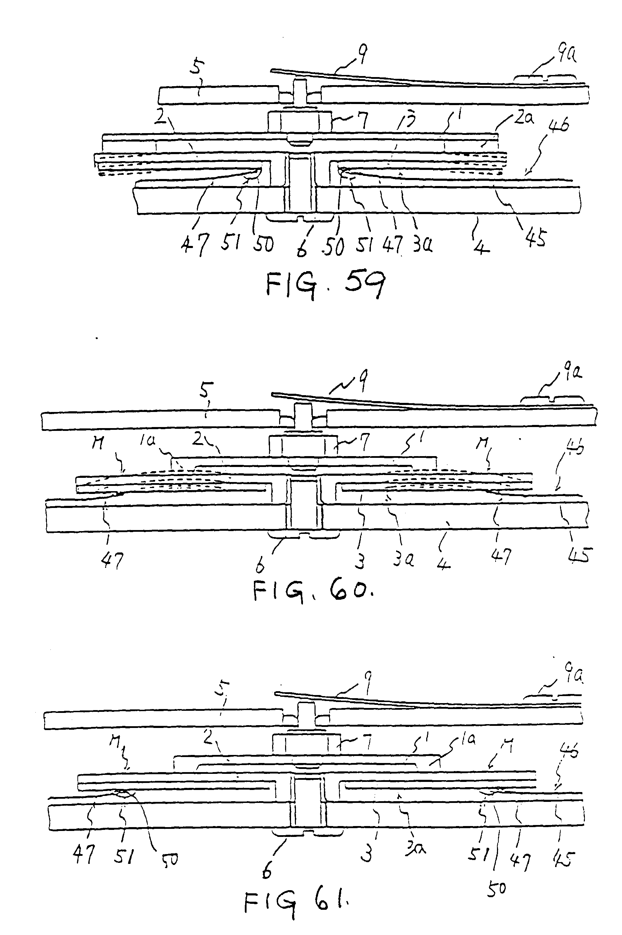

Figure 59 is a sectional view showing another embodiment of an ultrasonic step motor according to the present invention. A conductive material 51 is attached to each of portions 50 where the overhang portions 47 of the circuit patterns 46 are brought into contact with the electrode patterns 3a, thereby enhancing the conduction reliability. Also, on the external shape side where the vibration amplitude is large, the rotor 1 is in contact with the projections 2a which are adapted to increase the circumferential vibration amplitude. The broken lines show the deformed conditions of the stator 2, and the contact portions 50 are provided at places where the vibration amplitudes are small as will be seen from Figure 59. While this is also the same in the previously mentioned embodiment, in the construction of Figure 59, the contacting of the circuit patterns 46 does not have much effect on the vibrations.

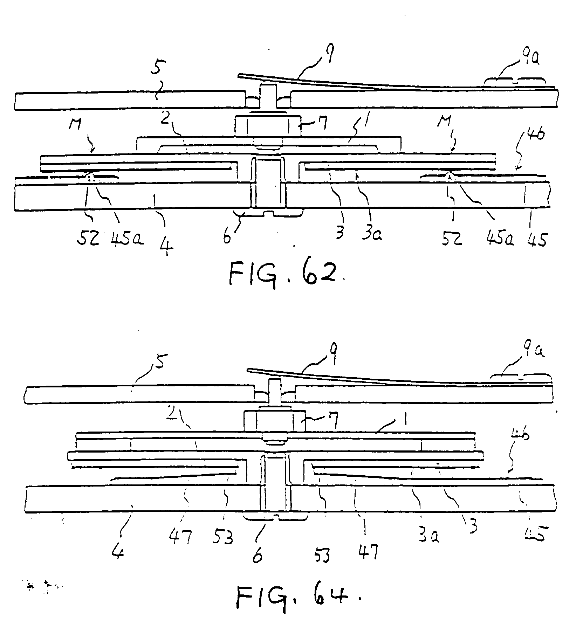

Figure 60 is a sectional view showing still another embodiment of an ultrasonic step motor according to the present invention. This embodiment differs from the previous embodiment in that the stator 2 is in contact with projections 1a formed on the lower surface of the disk-type rotor 1. The broken lines show examples of the deformed condition during vibrations and the illustrated case shows the vibration mode with nodal circles M. In this case, the portions of the nodal circles M do not vibrate and therefore the overhang portions 47 of the circuit patterns 46 are in contact with the electrode patterns 3a of the vibrating unit 3. Also, the rotor 1 and the stator 2 are in contact at the portions of the vibration antinodes. In this construction, even if the overhang portions 47 are strongly forced into contact, there is no effect on the vibrations and thus the conduction reliability is enhanced.

Figure 61 is a sectional view showing still another embodiment of an ultrasonic step motor according to the present invention. This embodiment differs from the previous embodiment in that the conduction reliability is further improved by attaching a conductive agent 51, e.g. conductive adhesive or solder, to each of the contact portions 50 for the overhang portions 47 and the electrodes 3a. Even in this embodiment, due to the attachment of the conductive agent 51 to the portions of the vibration nodal circles M of the stator 2, the mass of the conductive agent 51 has no effect on the vibrations.

Figure 62 is a sectional view showing still another embodiment of an ultrasonic step motor according to the present invention. This embodiment utilizes the same vibration mode as Figures 60 and 61. The rotor 1 and the stator 2 are brought into contact at the portions of the vibration antinodes so that each of the electrode patterns 3a of the piezo-electric unit 3 is in contact with one of projections 52 provided at the circuit patterns 46 of the circuit board 45. Each projection 52 is formed at one of holes 45a provided in the circuit board 45. With this construction, by fastening the stator 2 in place with the fastening screw 6, the projections 52 are sandwiched by the ground plate 4 and the electrode patterns 3a, thereby ensuring the conduction. In this case, any variations in the height of the projections 52 are tolerated by the plastic deformation and elastic deformation of the projections 52.

Figure 63 is a plan view showing the relationship between the circuit patterns, the projections and the vibrators. The positions of the circuit patterns 46 and the projections 52 which are formed on the circuit board 45 correspond to the electrode patterns 3a of the piezo-electric unit 3 which are indicated by the broken lines. While the number of the vibrators 108 in this case is twelve as shown in Figure 58, the present invention is not limited to this embodiment.

Figure 64 is a sectional view showing still another embodiment of an ultrasonic step motor according to the present invention. This embodiment employs the same vibration mode as that of Figure 59. Since the vibration amplitude of the stator 2 is low in the central portion, current is supplied through bumps or projections 53 and the overhang portions 47 of the circuit patterns 46 formed on the circuit board 45 on the inner diameter side of the electrode patterns 3a of the piezo-electric unit 3. In this case, the bumps 53 are made of solder, gold, conductive adhesive or the like, and the electrode patterns 3a and the overhang portions 47 are fastened together to effect the electric conduction. As a result, a holding force is possessed by the bumps 53, and variations in the height direction are accommodated by the elastic deformation and plastic deformation of the overhang portions 47. This construction has a high degree of freedom for position setting in the height direction and the electric conduction is positively ensured.

It is to be noted that in order to ensure electrical conduction in the ultrasonic step motor, the only requirement is that the electrode patterns 3a and the circuit patterns 47 are elastically brought into contact so as to provide electrical conduction and the invention is not limited to the above-mentioned embodiments. Also, the modes of vibration are not limited to the previously mentioned embodiments.

As described above, the relieved portion(s) of the stator or the rotor can be formed by an etching process and the piezo-electric element can be formed directly on the stator. The shape and function of the relieved portion and the projections are not limited to the various embodiments mentioned above of the ultrasonic motor according to the present invention. Any materials, such as metals and silicones and the like, can be used to make the rotor and the stator, when they can be etched or formed by so-called micro-machining techniques.

## Claims

1. An ultrasonic motor comprising a stator (2); a vibrator (3) formed on said stator (2) for oscillating said stator (2); a rotor (1) adapted to come into contact with said stator (2) and driven by frictional force; a plurality of spaced apart projections (la-ld) formed on one of said rotor (1) and said stator (2) and in operation engaging with the other of said rotor (1) and said stator (2), said projections (1a-1d) being positioned opposite said vibrator (3) with respect to said stator (2); and at least one drive control apparatus (103,106) for impressing standing waves of a wavelength $\lambda$ on a plurality of vibrating devices (107) which form the said vibrator (108), characterised in that the drive control apparatus (103,106) comprises means (106) for changing the phases of the waves supplied to the individual vibrating devices or for effecting ON-OFF operation thereof, so as to shift the nodes of the standing waves stepwise by a given distance (L) at a time.

2. An ultrasonic motor as claimed in claim 1 characterised in that the given distance (L) is less than $\lambda/4$.

3. An ultrasonic motor as claimed in claim 1 or 2 characterised in that the said drive control apparatus (103, 106) displaces the positions of the n nodes of a disc-like or ring-like stator (2) which oscillates in a vibration mode of standing waves, the nodes shifting by $\theta°$ at a time such that $\theta° < 90°/n$.

4. An ultrasonic motor as claimed in any of claims 1 to 3, characterised in that, in addition to the first-mentioned drive control apparatus (103) for producing standing waves, there is a second drive control apparatus (304) for impressing advancing waves on the vibrator (3) so as to continuously drive the rotor (1), a change-over circuit (305) being provided for changing over between the first mentioned and second mentioned drive control apparatuses (103b, 304).

5. An ultrasonic motor as claimed in any preceding claim characterised in that the rotor (1) comprises a resilient member or members.

6. An ultrasonic motor as claimed in any preceding claim characterised in that the rotor projections (1a-1d) have sliding faces (34) which are arranged to contact a part or parts (2a) of the stator (2), the sliding faces (34) and/or the said part or parts (2a) having slanting or curved relieved portions (32, 33, 35, 36) to reduce interference therebetween.

7. An ultrasonic motor as claimed in any preceding claim characterised in that the stator (2) has a plurality of projections (2a) which are adapted to come into contact with the rotor projections (1a-1d).

8. An ultrasonic motor as claimed in claim 7 characterised in that the stator projections (2d) extend radially outwardly from the circumference of the stator (2).

9. An ultrasonic motor as claimed in claim 8 characterised in that the stator projections (2d) are disposed at places which do not in operation become vibration nodes of the stator.

10. An ultrasonic motor as claimed in any preceding claim characterised in that the vibrator comprises at least one piezo-electric element (3).

11. An ultrasonic motor as claimed in claim 10 characterised in that the piezo-electric element (3) has a plurality of electrodes (3a) formed thereon; the motor having a base plate (4) provided with wiring members (41a) corresponding to the electrodes (3a); and an anisotropy conductor (4b) which connects together the electrodes (3a) and wiring members (41a).

12. An ultrasonic motor as claimed in claim 11 characterised in that the motor also comprises a circuit board (45) having a plurality of circuit members (46a) each of which is urged into contact with a respective electrode (3a).

13. An ultrasonic motor as claimed in any preceding claim characterised in that the stator (2) and/or the rotor (1) has a relieved portion (52) which is formed by etching.

## Patentansprüche

1. Ultraschallmotor mit einem Stator (2); einem auf dem Stator ausgebildeten Vibrator (3) zur Oszillation des Stators (2); einem Rotor (1), der darauf ausgerichtet ist, mit dem Stator (2) in Kontakt zu kommen und durch Reibungskraft angetrieben ist; einer Mehrzahl voneinander beabstandeter Vorsprünge (1a - 1d), die auf einem Teil ausgewählt aus dem Rotor (1) und dem Stator (2) ausgebildet sind und im Betrieb mit dem anderen Teil ausgewählt aus dem Rotor (1) und dem Stator (2) in Eingriff sind, wobei die Vorsprünge (1a - 1d) gegenüberliegend zu dem Vibrator (3) in bezug auf den Stator (2) positioniert sind; und mindestens einer Antriebssteuervorrichtung (103, 106) zum Anlegen von stehenden Wellen einer Wellenlänge $\lambda$ auf eine Mehrzahl von Vibrationsvorrichtungen (107), welche den Vibrator (108) ausbilden, dadurch gekennzeichnet, daß die Antriebssteuervorrichtung (103, 106) Mittel (106) aufweist, um die Phasen der Wellen zu ändern, welche den einzelnen Vibrationsvorrichtungen zugeführt werden, oder um eine EIN-AUS-Operation hiervon zu bewirken, um die Knotenpunkte der stehenden Wellen schrittweise jeweils um einen gegebenen Abstand (L) zu verschieben.

2. Ultraschallmotor gemäß Anspruch 1, dadurch gekennzeichnet, daß der gegebene Abstand (L) weniger als $\lambda/4$ beträgt.

3. Ultraschallmotor gemäß Anspruch 1 oder 2, dadurch gekennzeichnet, daß die Antriebssteuervorrichtung (103, 106) die Positionen der n-Knotenpunkte eines scheibenartigen oder ringartigen Stators (2) verschiebt, welcher in einem Vibrationsmodus von stehenden Wellen oszilliert, wobei sich die Knotenpunkte jeweils um $\theta°$ verschieben, so daß $\theta° < 90°/n$ gilt.

4. Ultraschallmotor gemäß einem der Ansprüche 1 bis 3, dadurch gekennzeichnet, daß zusätzlich zu der erstgenannten Antriebssteuervorrichtung (103) zur Erzeugung von stehenden Wellen eine zweite Antriebssteuervorrichtung (304) zur Verfügung gestellt ist, um fortschreitende Wellen an den Vibrator (3) anzulegen, um den Rotor (1) kontinuierlich anzutreiben, wobei ein Umschaltkreis (305) zur Verfügung gestellt ist, um zwischen der erstgenannten und der als zweites genannten Antriebssteuervorrichtung (103b, 304) umzuschalten.

5. Ultraschallmotor gemäß einem der vorhergehenden Ansprüche, dadurch gekennzeichnet, daß der Rotor (1) ein elastisches Element oder elastische Elemente aufweist.

6. Ultraschallmotor gemäß einem der vorhergehenden Ansprüche, dadurch gekennzeichnet, daß die Rotorvorsprünge (1a - 1d) Gleitflächen (34) aufweisen, welche angeordnet sind, um mit einem Teil oder Teilen (2a) des Stators (2) in Kontakt zu kommen, wobei die Gleitflächen (34) und/oder das Teil oder die Teile (2a) schräge oder gebogene ausgesparte Bereiche (32, 33, 35, 36) aufweisen, um die Interferenz dazwischen zu verringern.

7. Ultraschallmotor gemäß einem der vorhergehenden Ansprüche, dadurch gekennzeichnet, daß der Stator (2) eine Mehrzahl von Vorsprüngen (2a) aufweist, welche darauf ausgerichtet sind, mit den Rotorvorsprüngen (1a - 1d) in Kontakt zu kommen.

8. Ultraschallmotor gemäß Anspruch 7, dadurch gekennzeichnet, daß sich die Statorvorsprünge (2d) vom Umfang des Stators (2) radial nach außen erstrecken.

9. Ultraschallmotor gemäß Anspruch 8, dadurch gekennzeichnet, daß die Statorvorsprünge (2d) an Stellen angeordnet sind, welche im Betrieb keine Vibrationsknotenpunkte des Stators werden.

10. Ultraschallmotor gemäß einem der vorhergehenden Ansprüche, dadurch gekennzeichnet, daß der Vibrator mindestens ein piezoelektrisches Element (3) aufweist.

11. Ultraschallmotor gemäß Anspruch 10, dadurch gekennzeichnet, daß das piezoelektrische Element (3) eine Mehrzahl hierauf ausgebildeter Elektroden (3a) aufweist; wobei der Motor eine Basisplatte (4) mit Verdrahtungselementen (41a) entsprechend der Elektroden (3a) aufweist; und einen Anisotropieleiter (4b) aufweist, welcher die Elektroden (3a) und die Verdrahtungselemente (41a) miteinander verbindet.

12. Ultraschallmotor gemäß Anspruch 11, dadurch gekennzeichnet, daß der Motor ebenso eine Schaltungsplatte (45) mit einer Mehrzahl von Schaltungselementen (46a) aufweist, wovon jedes mit einer entsprechenden Elektrode (3a) in Kontakt gedrückt ist.

13. Ultraschallmotor gemäß einem der vorhergehenden Ansprüche, dadurch gekennzeichnet, daß der Stator (2) und/oder der Rotor (1) einen durch Ätzen gebildeten ausgesparten Bereich (52) aufweist.

**Revendications**

1. Moteur à ultrasons comprenant un stator (2), un vibreur (3) formé sur ledit stator (2) pour faire osciller ledit stator (2), un rotor (1) prévu pour venir en contact avec ledit stator (2)et entraîné par friction, une pluralité de projections espacées (la à ld) formées sur un des éléments parmi ledit rotor (1) et ledit stator (2) et coopérant, de façon fonctionnelle, avec l'autre élément parmi ledit rotor (1) et ledit stator (2), lesdites projections (la à ld) étant placées en opposition audit vibreur (3) par rapport audit stator (2), et au moins un dispositif de commande d'entraînement (103, 106) pour appliquer des ondes stationnaires d'une longueur d'onde $\lambda$ à une pluralité de dispositifs de vibration (107) formant ledit vibreur (108),

moteur caractérisé en ce que le dispositif de commande d'entraînement (103, 106) comprend un moyen (106) pour modifier les phases des ondes fournies auxdits dispositifs individuels de vibration ou pour effectuer leur opération ON/OFF de façon à décaler les noeuds des ondes stationnaires pas-à-pas d'une distance donnée (L) en une fois.

2. Moteur à ultrasons selon la revendication 1, caractérisé en ce que la distance donnée (L) est inférieure à λ/4.

3. Moteur à ultrasons selon la revendication 1 ou 2, caractérisé en ce que ledit dispositif de commande d'entraînement (103, 106) déplace les positions de n noeuds d'un stator en forme de disque ou d'anneau (2) oscillant dans un mode de vibration des ondes stationnaires, les noeuds se déplaçant de θ° à la fois de telle façon que θ < 90°/n.

4. Moteur à ultrasons selon l'une quelconque des revendications 1 à 3, caractérisé en ce que, en plus du dispositif de commande d'entraînement (103) mentionné en premier pour la production des ondes stationnaires, on trouve un second dispositif de commande d'entraînement (304) pour appliquer des ondes mobiles au vibreur (3) de façon à entraîner en continu le rotor (1), un circuit de commutation (305) étant prévu pour commuter entre le premier et le second dispositifs de commande d'entraînement (103b, 304).

5. Moteur à ultrasons selon l'une quelconque des revendications précédentes, caractérisé en ce que le rotor (1) comprend une ou des pièces élastiques.

6. Moteur à ultrasons selon l'une quelconque des revendications précédentes, caractérisé en ce que les projections du rotor (1A à 1d) possèdent des faces de coulissement (34) agencées pour entrer en contact avec une ou des parties (2a) du stator (2), les faces de coulissement (34) et/ou ladite ou lesdites parties (2a) ayant des parties en pente ou incurvées libérées (32, 33, 35, 36) pour en réduire les interférences.

7. Moteur à ultrasons selon l'une quelconque des revendications précédentes, caractérisé en ce que le stator (2) possède une pluralité de projections (2a) prévues pour venir en contact avec les projections de rotor (1a à 1d).

8. Moteur à ultrasons selon la revendication 7, caractérisé en ce que les projections de stator (2d) s'étendent radialement vers l'extérieur à partir de la circonférence du stator (2).

9. Moteur à ultrasons selon la revendication 8, caractérisé en ce que les projections du stator (2d) sont placées en des endroits ne devenant pas, en fonctionnement, des noeuds de vibration du stator.

10. Moteur à ultrasons selon l'une quelconque des revendications précédentes, caractérisé en ce que le vibreur comprend au moins un élément piézo-électrique (3).

11. Moteur à ultrasons selon la revendication 10, caractérisé en ce que l'élément piézo-électrique (3) possède une pluralité d'électrodes (3a) formées dessus, le moteur possédant une plaque de base (4) munie de pièces de câblage (41a) correspondant aux électrodes (3a), et un conducteur anisotrope (4b) raccordant les électrodes (3a) et les pièces de câblage (41a).

12. Moteur à ultrasons selon la revendication 11, caractérisé en ce que le moteur comprend, de même, une plaque de circuit (45) munie d'une pluralité de pièces de circuit (46a) dont chacune d'elles est poussée en contact avec une électrode respective (3a).

13. Moteur à ultrasons selon l'une quelconque des revendications précédentes, caractérisé en ce que le stator (2) et/ou le rotor (1) possède(nt) une partie libérée (52) formée par attaque chimique.

EP 0 424 139 B1

Fig. 1

Fig. 7

16

Fig. 2a

Fig. 2b

Fig. 2c

Fig. 2d

Fig. 2e

Fig. 3a

Fig. 3b

Fig. 4

Fig. 5

Fig. 6a

Fig. 6b

Fig. 6c

Fig. 6d

Fig. 8

Fig. 9

Fig. 10

Fig. 11

Fig. 12

Fig. 13

Fig. 14

Fig. 15.

Fig. 16

Fig. 17

Fig. 18a

Fig. 18c

Fig. 18 b

Fig. 18 d

Fig. 19 a

Fig. 19 b

Fig. 19 c

Fig. 20a

Fig. 20b

Fig. 20c

Fig. 21

Fig. 22

EP 0 424 139 B1

Fig. 23

Fig. 24A

Fig. 25

Fig. 24B

Fig. 26A

EP 0 424 139 B1

D ——————————————————— D

PHASE SHIFTER 303

OSCILLATION CIRCUIT 302

Fig. 26B

EP 0 424 139 B1

Fig. 27A

Fig. 27 B

Fig. 28

Fig. 29

Fig. 30

Fig. 31

Fig. 32

Fig. 33

Fig. 34

Fig. 35

2a  35  1a

Fig. 36

Z

2a  36  1a

Fig. 37

2

Fig. 38

Fig. 39

Fig. 40

Fig. 41

Fig. 42.

Fig. 43

Fig. 44

Fig. 45

Fig. 46

Fig. 47

Fig. 48

Fig. 49

Fig. 50

Fig. 51

Fig. 52

Fig. 53

2

2a

2e

52

Fig. 54

52

1

1a

1e

Fig. 56

Fig. 55

FIG. 57.

EP 0 424 139 B1

FIG. 58.

FIG 63.

FIG. 59

FIG. 60.

FIG 61.

FIG. 62.

FIG. 64.